(19)

Europäisches
Patentamt
European
Patent Office
Office européen
des brevets

(11) **EP 4 524 874 A1**

(12) **EUROPEAN PATENT APPLICATION**
published in accordance with Art. 153(4) EPC

(43) Date of publication:
**19.03.2025 Bulletin 2025/12**

(21) Application number: **23814981.9**

(22) Date of filing: **18.05.2023**

(51) International Patent Classification (IPC):
**G06T 3/00** (2024.01)

(52) Cooperative Patent Classification (CPC):
**G06N 3/042; G06N 3/084; G06T 3/00**

(86) International application number:
**PCT/CN2023/095069**

(87) International publication number:
**WO 2023/231796 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 CN 202210612484**

(71) Applicant: **Huawei Technologies Co., Ltd.
Shenzhen, Guangdong 518129 (CN)**

(72) Inventors:
• **HAN, Kai**
**Shenzhen, Guangdong 518129 (CN)**
• **GUO, Jianyuan**
**Shenzhen, Guangdong 518129 (CN)**
• **TANG, Yehui**
**Shenzhen, Guangdong 518129 (CN)**
• **WANG, Yunhe**
**Shenzhen, Guangdong 518129 (CN)**

(74) Representative: **Gill Jennings & Every LLP
The Broadgate Tower
20 Primrose Street
London EC2A 2ES (GB)**

(54) **VISUAL TASK PROCESSING METHOD AND RELATED DEVICE THEREOF**

(57) This application discloses a visual task processing method and a related device thereof. A to-be-processed image may be processed by using a target model, and features finally output by the target model may remain diversified, to help improve processing precision of a visual task for the to-be-processed image. The method in this application includes: obtaining a to-be-processed image; processing the to-be-processed image by using a target model, to obtain a feature of the to-be-processed image, where the target model includes a first module and a second module, the first module is connected to the second module, the first module includes at least a graph neural network, and the second module is configured to implement at least feature transformation; and completing a visual task for the to-be-processed image based on the feature of the to-be-processed image.

FIG. 6

EP 4 524 874 A1

**Description**

This application claims priority to Chinese Patent Application No. 202210612484.X, filed with the China National Intellectual Property Administration on May 31, 2022 and entitled "VISUAL TASK PROCESSING METHOD AND RELATED DEVICE THEREOF", which is incorporated herein by reference in its entirety.

**TECHNICAL FIELD**

Embodiments of this application relate to the field of artificial intelligence (artificial intelligence, AI) technologies, and in particular, to a visual task processing method and a related device thereof.

**BACKGROUND**

With the rapid development of computer technologies, graph neural networks are widely used for processing various computer vision tasks, for example, visual tasks in various fields such as image classification in the field of facial recognition, target detection in the field of video surveillance, and semantic segmentation in the field of autonomous driving.

Currently, when a visual task for a to-be-processed image needs to be processed, the to-be-processed image may be input into a graph neural network for processing, to obtain a feature of the to-be-processed image, so as to complete the visual task for the to-be-processed image based on the feature of the to-be-processed image.

In the foregoing process, the to-be-processed image is input into the graph neural network in a graph structure manner, and the graph structure includes a plurality of nodes, that is, a plurality of pixels of the to-be-processed image. In a process of processing the graph structure by the graph neural network, feature aggregation between nodes is continuously performed, causing features of adjacent nodes to be increasingly similar. Consequently, features that are of the plurality of nodes and that are finally output by the graph neural network are excessively similar, and diversity of the features is lost, affecting processing precision of a visual task.

**SUMMARY**

Embodiments of this application provide a visual task processing method and a related device thereof. A to-be-processed image may be processed by using a target model, and features finally output by the target model may remain diversified, to help improve processing precision of a visual task for the to-be-processed image.

A first aspect of embodiments of this application provides a visual task processing method. The method includes: When a visual task for a to-be-processed image needs to be processed, the to-be-processed image may be first obtained. The to-be-processed image may be a frame of image in a video stream, an independent image, or the like.

After the to-be-processed image is obtained, the to-be-processed image may be input into a target model (that is, a trained neural network model), to process the to-be-processed image by using the target model, so as to obtain a feature of the to-be-processed image (which may also be referred to as a final feature of the to-be-processed image). The target model includes a first module and a second module, the first module is connected to the second module, the first module includes a graph neural network (that is, the first module is configured to implement at least feature aggregation), and the second module includes a feature transformation layer (that is, the second module is configured to implement at least feature transformation).

For example, assuming that the target model includes one first module and one second module, there may be two cases between the first module and the second module: (1) An input end of the first module may be used as an input end of the entire target model, an output end of the first module is connected to an input end of the second module, and an output end of the second module may be used as an output end of the entire target model. (2) An input end of the second module may be used as an input end of the entire target model; an output end of the second module is connected to an input end of the first module, and an output end of the first module may be used as an output end of the entire target model.

In this case, the to-be-processed image input into the target model may be considered as a graph structure, a plurality of pixels of the to-be-processed image may be considered as a plurality of nodes of the graph structure, and information such as pixel values of the plurality of pixels (the information is included in the to-be-processed image) is features of the plurality of nodes. In the foregoing case (1), after the first module of the target model receives the features of the plurality of nodes in the graph structure, the first module may perform feature aggregation on at least the features of the plurality of nodes in the graph structure (for example, the first module may perform feature aggregation and feature update on the features of the plurality of nodes in the graph structure), to obtain updated features of the plurality of nodes. After receiving the updated features of the plurality of nodes from the first module, the second module may perform feature transformation on at least the updated features of the plurality of nodes, to obtain features that are of the plurality of nodes and that are obtained through transformation. The features that are of the P nodes and that are obtained through transformation may be used as an output of the target model, that is, a (final) feature of the to-be-processed image. In the foregoing case (2), after the second module of the target model receives the features of the plurality of nodes in the graph structure, the second module may perform feature transformation on at least the features of the plurality of nodes in the graph structure, to obtain the features that are of the plurality of nodes and that are obtained through transformation. After receiving the features that are of the plurality of nodes and that are obtained through transformation from the second module, the first module may perform feature aggregation on at least the features that are of the plurality of nodes and that are obtained through transformation, to obtain updated features of the plurality of nodes. The updated features of the P nodes may be used as an output of the target model, that is, a (final) feature of the to-be-processed image.

After the feature of the to-be-processed image is obtained, the visual task for the to-be-processed image may be completed based on the feature of the to-be-processed image.

It can be learned from the foregoing method that, after the to-be-processed image is obtained, the to-be-processed image may be input into the target model, to process the to-be-processed image by using the target model, to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

In a possible implementation, a quantity of second modules is N+M, N≥1, and M≥1, and the processing the to-be-processed image by using a target model, to obtain a feature of the to-be-processed image includes: performing at least N times of feature transformation on the to-be-processed image by using N second modules connected in series, to obtain a first feature; performing feature aggregation on at least the first feature by using the first module, to obtain a second feature; performing at least M times of feature transformation on the second feature by using M second modules connected in series, to obtain a third feature; and obtaining the feature of the to-be-processed image based on the third feature. In the foregoing implementation, the target model includes the first module, the second module located before the first module (including the N second modules connected in series), and the second module located after the first module (including the M second modules connected in series). The first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes, and consider information such as pixel values of the plurality of pixels as features of the plurality of nodes. The second module located before the first module may first perform feature transformation on the features of the plurality of nodes in the graph structure, so that features (that is, the first feature) that are of the plurality of nodes and that are obtained through transformation are greatly different from each other in advance. Therefore, after the first module performs feature aggregation on the features that are of the plurality of nodes and that are obtained through transformation, obtained updated features (that is, the second feature) of the plurality of nodes are also different from each other, and the second module located after the first module may further perform feature transformation on the updated features of the plurality of nodes, so that features (that is, the third feature) that are of the plurality of nodes and that are obtained through re-transformation are more different from each other. An output of the target model may be obtained based on the features that are of the plurality of nodes and that are obtained through re-transformation (for example, the features that are of the plurality of nodes and that are obtained through re-transformation may be directly used as the output of the target model), that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

In a possible implementation, the target model further includes a third module, and the obtaining the feature of the to-be-processed image based on the third feature includes: fusing the to-be-processed image and the third feature by using the third module, to obtain a fourth feature; and obtaining the feature of the to-be-processed image based on the fourth feature. In the foregoing implementation, the target model further includes the third module, the third module includes a fusion layer, an input end of the third module is the input end of the target model, and another input end of the third module is connected to the second module located after the first module. In this case, after receiving the features that of the plurality of nodes, that are obtained through re-transformation, and that are output by the second module located after the first module, the third module may fuse the features of the plurality of nodes and the features that are of the plurality of nodes and that are obtained through re-transformation, to obtain features (that is, the fourth features) that are of the plurality of nodes and that are obtained through fusion. Therefore, the output of the target model may be obtained based on the features that are of the plurality of nodes and that are obtained through fusion (for example, the features that are of the plurality of nodes and that are obtained through fusion may be directly used as the output of the target model).

In a possible implementation, the target model further includes K fourth modules that are connected in series and a fifth module, $K \geq 1$, and the obtaining the feature of the to-be-processed image based on the fourth feature includes: performing at least K times of feature transformation on the fourth feature by using the K fourth modules, to obtain a fifth feature; and fusing the fourth feature and the fifth feature by using the fifth module, to obtain the feature of the to-be-processed image. In the foregoing implementation, the target model further includes the fourth module and the fifth module. The fourth module (including the K fourth modules connected in series) located between the fifth module and the third module includes a feature transformation layer, the fifth module includes a fusion layer, an input end of the fifth module is connected to the third module, and another input end of the fifth module is connected to the fourth module. Therefore, after receiving the features that are of the plurality of nodes and that are obtained through fusion, the fourth module may perform feature transformation on at least the features that are of the plurality of nodes and that are obtained through fusion, to obtain features (that is, the fifth feature) that are of the plurality of nodes and that are obtained through further transformation. After receiving the features that are of the plurality of nodes and that are obtained through fusion and the further features that are of the plurality of nodes and that are obtained through transformation, the fifth module may fuse the features that are of the plurality of nodes and that are obtained through fusion and the further features that are of the plurality of nodes and that are obtained through transformation, to obtain re-features that are of the plurality of nodes and that are obtained through fusion, where the re-features that are of the plurality of nodes and that are obtained through fusion may be directly used as the output of the target model, that is, the feature of the to-be-processed image.

In a possible implementation, the first module further includes the graph neural network, a normalization layer, and an activation function layer, and the graph neural network of the first module, the normalization layer of the first module, and the activation function layer of the first module are connected in series. In the foregoing implementation, the first module may not only implement feature aggregation and feature update, but also perform functions such as feature normalization and non-linear processing.

In a possible implementation, the second module includes a feature transformation layer and a normalization layer, the feature transformation layer of the second module and the normalization layer of the second module are connected in series, and the feature transformation layer of the second module is a fully-connected layer, a convolutional layer, or a Fourier transformation layer. In the foregoing implementation, the second module may not only implement feature transformation, but also implement functions such as feature normalization.

In a possible implementation, the fourth module includes a feature transformation layer and a normalization layer, and the feature transformation layer of the fourth module and the normalization layer of the fourth module are connected in series; or, the fourth module includes a feature transformation layer, a normalization layer, and an activation function layer, and the feature transformation layer of the fourth module, the normalization layer of the fourth module, and the activation function layer of the fourth module are connected in series, where the feature transformation layer of the fourth module is a fully-connected layer, a convolutional layer, or a Fourier transformation layer. In the foregoing implementation, the fourth module may not only implement feature transformation, but also implement functions such as feature normalization and non-linear processing.

In a possible implementation, before the processing the to-be-processed image by using a target model, to obtain a feature of the to-be-processed image, the method further includes: dividing the to-be-processed image, to obtain P patches, where $P > 1$; mapping the P patches, to obtain vector representations of the P patches; and constructing an initial feature of the to-be-processed image based on the vector representations of the P patches; and the processing the to-be-processed image by using a target model, to obtain a feature of the to-be-processed image includes: processing the initial feature of the to-be-processed image by using the target model, to obtain the feature of the to-be-processed image. In the foregoing implementation, the to-be-processed image may be divided into a plurality of (P) patches, and the vector representations of the plurality of patches are obtained. In this case, the plurality of patches of the to-be-processed image may be used as the plurality of nodes in the graph structure, and the vector representations of the plurality of patches may be used as the features of the plurality of nodes, so that a quantity of nodes in the graph structure can be effectively reduced. For example, the to-be-processed image is divided into 100 patches, the graph structure corresponding to the to-be-processed image includes 100 nodes, and the graph neural network of the first module in the target model needs to process only 100 nodes. This can effectively reduce a calculation amount required for the graph neural network, and help the target model be used in some devices with limited computing power.

In a possible implementation, before the constructing an initial feature of the to-be-processed image based on the vector representations of the P patches, the method further includes: adding positional encoding of an $i^{th}$ patch and a vector representation of the $i^{th}$ patch, to obtain a vector representation that is of the $i^{th}$ patch and that is obtained through processing, where the positional encoding of the $i^{th}$ patch indicates a position of the $i^{th}$ patch in the to-be-processed image, and i=1, ..., P; and the constructing an initial feature of the to-be-processed image based on the vector representations of the P patches includes: constructing the initial feature of the to-be-processed image based on vector representations that are of the P patches and that are obtained through processing. In the foregoing implementation, positional encoding of the plurality of patches may be added to the vector representations of the plurality of patches. Therefore, the obtained vector representations that are of the plurality of patches and that are obtained through processing not only include original information of the patches, but also include position information of the patches. This helps enrich information included in the feature of the to-be-processed image, so as to further improve processing precision of a visual task.

In a possible implementation, the visual task includes at least one of the following: image classification, target detection, semantic segmentation, image denoising, and image super-resolution.

A second aspect of embodiments of this application provides a model training method. The method includes: obtaining a to-be-processed image; processing the to-be-processed image by using a to-be-trained model, to obtain a feature of the to-be-processed image, where the to-be-trained model includes a first module and a second module, the first module is connected to the second module, the first module includes at least a graph neural network, and the second module is configured to implement at least feature transformation; obtaining a target loss based on the feature of the to-be-processed image and a real feature of the to-be-processed image, where the target loss indicates a difference between the feature of the to-be-processed image and the real feature of the to-be-processed image; and updating parameters of the to-be-trained model based on the target loss, until a model training condition is met, to obtain a target model.

The target model obtained through training in the foregoing method has a function of obtaining a feature of an image. When the visual task for the to-be-processed image needs to be processed, the to-be-processed image may be first obtained, and the to-be-processed image is input into the target model, to process the to-be-processed image by using the target model, so as to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

In a possible implementation, a quantity of second modules is N+M, N≥1, and M≥1, and the processing the to-be-processed image by using a to-be-trained model, to obtain a feature of the to-be-processed image includes: performing at least N times of feature transformation on the to-be-processed image by using N second modules connected in series, to obtain a first feature; performing feature aggregation on at least the first feature by using the first module, to obtain a second feature; performing at least M times of feature transformation on the second feature by using M second modules connected in series, to obtain a third feature; and obtaining the feature of the to-be-processed image based on the third feature.

In a possible implementation, the to-be-trained model further includes a third module, and the obtaining the feature of the to-be-processed image based on the third feature includes: fusing the to-be-processed image and the third feature by using the third module, to obtain a fourth feature; and obtaining the feature of the to-be-processed image based on the fourth feature.

In a possible implementation, the to-be-trained model further includes K fourth modules that are connected in series and a fifth module, K≥1, and the obtaining the feature of the to-be-processed image based on the fourth feature further includes: performing at least K times of feature transformation on the fourth feature by using the K fourth modules, to obtain a fifth feature; and fusing the fourth feature and the fifth feature by using the fifth module, to obtain the feature of the to-be-processed image.

In a possible implementation, the first module includes the graph neural network, a normalization layer, and an activation function layer, and the graph neural network of the first module, the normalization layer of the first module, and the activation function layer of the first module are connected in series.

In a possible implementation, the second module includes a feature transformation layer and a normalization layer, the feature transformation layer of the second module and the normalization layer of the second module are connected in series, and the feature transformation layer of the second module is a fully-connected layer, a convolutional layer, or a Fourier transformation layer.

In a possible implementation, the fourth module includes a feature transformation layer and a normalization layer, and the feature transformation layer of the fourth module and the normalization layer of the fourth module are connected in series; or, the fourth module includes a feature transformation layer, a normalization layer, and an activation function layer, and the feature transformation layer of the fourth module, the normalization layer of the fourth module, and the activation function layer of the fourth module are connected in series, where the feature transformation layer of the fourth module is a fully-connected layer, a convolutional layer, or a Fourier transformation layer.

In a possible implementation, before the processing the to-be-processed image by using a to-be-trained model, to obtain a feature of the to-be-processed image, the method further includes: dividing the to-be-processed image, to obtain P patches, where P>1; mapping the P patches, to obtain vector representations of the P patches; and constructing an initial feature of the to-be-processed image based on the vector representations of the P patches; and the processing the to-be-processed image by using a to-be-trained model, to obtain a feature of the to-be-processed image includes: processing the initial feature of the to-be-processed image by using the to-be-trained model, to obtain the feature of the to-be-processed image.

In a possible implementation, before the constructing an initial feature of the to-be-processed image based on the vector representations of the P patches, the method further includes: adding positional encoding of an ith patch and a vector representation of the ith patch, to obtain a vector representation that is of the ith patch and that is obtained through processing, where the positional encoding of the ith patch indicates a position of the ith patch in the to-be-processed image, and i=1, ..., P; and the constructing an initial feature of the to-be-processed image based on the vector representations of the P patches includes: constructing the initial feature of the to-be-processed image based on vector representations that are of the P patches and that are obtained through processing.

A third aspect of embodiments of this application provides a visual task processing apparatus. The apparatus includes: an obtaining module, configured to obtain a to-be-processed image; a first processing module, configured to process the to-be-processed image by using a target model, to obtain a feature of the to-be-processed image, where the target model includes a first module and a second module, the first module is connected to the second module, the first module includes at least a graph neural network, and the second module is configured to implement at least feature transformation; and a second processing module, configured to complete a visual task for the to-be-processed image based on the feature of the to-be-processed image.

It can be learned from the foregoing apparatus that, after the to-be-processed image is obtained, the to-be-processed image may be input into the target model, to process the to-be-processed image by using the target model, to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

In a possible implementation, a quantity of second modules is N+M, N≥1, and M≥1, and the first processing module is configured to: perform at least N times of feature transformation on the to-be-processed image by using N second modules connected in series, to obtain a first feature; perform feature aggregation on at least the first feature by using the first module, to obtain a second feature; perform at least M times of feature transformation on the second feature by using M second modules connected in series, to obtain a third feature; and obtain the feature of the to-be-processed image based on the third feature.

In a possible implementation, the target model further includes a third module, and the first processing module is configured to: fuse the to-be-processed image and the third feature by using the third module, to obtain a fourth feature; and obtain the feature of the to-be-processed image based on the fourth feature.

In a possible implementation, the target model further includes K fourth modules that are connected in series and a fifth module, K≥1, and the first processing module is configured to: perform at least K times of feature transformation on the fourth feature by using the K fourth modules, to obtain a fifth feature; and fuse the fourth feature and the fifth feature by using the fifth module, to obtain the feature of the to-be-processed image.

In a possible implementation, the first module further includes the graph neural network, a normalization layer, and an activation function layer, and the graph neural network of the first module, the normalization layer of the first module, and the activation function layer of the first module are connected in series.

In a possible implementation, the second module includes a feature transformation layer and a normalization layer, the feature transformation layer of the second module and the normalization layer of the second module are connected in series, and the feature transformation layer of the second module is a fully-connected layer, a convolutional layer, or a Fourier transformation layer.

In a possible implementation, the fourth module includes a feature transformation layer and a normalization layer, and the feature transformation layer of the fourth module and the normalization layer of the fourth module are connected in series; or, the fourth module includes a feature transformation layer, a normalization layer, and an activation function layer, and the feature transformation layer of the fourth module, the normalization layer of the fourth module, and the activation function layer of the fourth module are connected in series, where the feature transformation layer of the fourth module is a fully-connected layer, a convolutional layer, or a Fourier transformation layer.

In a possible implementation, the apparatus further includes: a preprocessing module, configured to: divide the to-be-processed image, to obtain P patches, where P>1; map the P patches, to obtain vector representations of the P patches; and construct an initial feature of the to-be-processed image based on the vector representations of the P patches; and the first processing module is configured to: process the initial feature of the to-be-processed image by using the target model, to obtain the feature of the to-be-processed image.

In a possible implementation, the preprocessing module is further configured to add positional encoding of an $i^{th}$ patch and a vector representation of the $i^{th}$ patch, to obtain a vector representation that is of the $i^{th}$ patch and that is obtained through processing, where the positional encoding of the $i^{th}$ patch indicates a position of the $i^{th}$ patch in the to-be-processed image, and i=1, ..., P; and the preprocessing module is configured to construct the initial feature of the to-be-processed image based on vector representations that are of the P patches and that are obtained through processing.

In a possible implementation, the visual task includes at least one of the following: image classification, target detection, semantic segmentation, image denoising, and image super-resolution.

A fourth aspect of embodiments of this application provides a model training apparatus. The apparatus includes: a first obtaining module, configured to obtain a to-be-processed image; a processing module, configured to process the to-be-processed image by using a to-be-trained model, to obtain a feature of the to-be-processed image, where the to-be-trained model includes a first module and a second module, the first module is connected to the second module, the first module includes at least a graph neural network, and the second module is configured to implement at least feature transformation; a second obtaining module, configured to obtain a target loss based on the feature of the to-be-processed image and a real feature of the to-be-processed image, where the target loss indicates a difference between the feature of the to-be-processed image and the real feature of the to-be-processed image; and an updating module, configured to update parameters of the to-be-trained model based on the target loss, until a model training condition is met, to obtain a target model.

The target model obtained through training by the foregoing apparatus has a function of obtaining a feature of an image. When the visual task for the to-be-processed image needs to be processed, the to-be-processed image may be first obtained, and the to-be-processed image is input into the target model, to process the to-be-processed image by using the target model, so as to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

In a possible implementation, a quantity of second modules is N+M, N≥1, and M≥1, and the processing module is configured to: perform at least N times of feature transformation on the to-be-processed image by using N second modules connected in series, to obtain a first feature; perform feature aggregation on at least the first feature by using the first module, to obtain a second feature; perform at least M times of feature transformation on the second feature by using M second modules connected in series, to obtain a third feature; and obtain the feature of the to-be-processed image based on the third feature.

In a possible implementation, the to-be-trained model further includes a third module, and the processing module is configured to: fuse the to-be-processed image and the third feature by using the third module, to obtain a fourth feature; and obtain the feature of the to-be-processed image based on the fourth feature.

In a possible implementation, the to-be-trained model further includes K fourth modules that are connected in series and a fifth module, K≥1, and the processing module is configured to: perform at least K times of feature transformation on the fourth feature by using the K fourth modules, to obtain a fifth feature; and fuse the fourth feature and the fifth feature by using the fifth module, to obtain the feature of the to-be-processed image.

In a possible implementation, the first module includes the graph neural network, a normalization layer, and an activation function layer, and the graph neural network of the first module, the normalization layer of the first module, and the activation function layer of the first module are connected in series.

In a possible implementation, the second module includes a feature transformation layer and a normalization layer, the feature transformation layer of the second module and the normalization layer of the second module are connected in series, and the feature transformation layer of the second module is a fully-connected layer, a convolutional layer, or a Fourier transformation layer.

In a possible implementation, the fourth module includes a feature transformation layer and a normalization layer, and the feature transformation layer of the fourth module and the normalization layer of the fourth module are connected in series; or, the fourth module includes a feature transformation layer, a normalization layer, and an activation function layer, and the feature transformation layer of the fourth module, the normalization layer of the fourth module, and the activation function layer of the fourth module are connected in series, where the feature transformation layer of the fourth module is a fully-connected layer, a convolutional layer, or a Fourier transformation layer.

In a possible implementation, the apparatus further includes: a preprocessing module, configured to: divide the to-be-processed image, to obtain P patches, where P>1; map the P patches, to obtain vector representations of the P patches; and construct an initial feature of the to-be-processed image based on the vector representations of the P patches; and the processing module is configured to process the initial feature of the to-be-processed image by using the to-be-trained model, to obtain the feature of the to-be-processed image.

In a possible implementation, the preprocessing module is further configured to add positional encoding of an $i^{th}$ patch and a vector representation of the $i^{th}$ patch, to obtain a vector representation that is of the $i^{th}$ patch and that is obtained through processing, where the positional encoding of the $i^{th}$ patch indicates a position of the $i^{th}$ patch in the to-be-processed image, and i=1, ..., P; and the preprocessing module is configured to construct the initial feature of the to-be-processed image based on vector representations that are of the P patches and that are obtained through processing.

A fifth aspect of embodiments of this application provides a visual task processing apparatus. The apparatus includes a memory and a processor. The memory stores code, the processor is configured to execute the code, and when the code is executed, the visual task processing apparatus performs the method according to any one of the first aspect or the possible implementations of the first aspect.

A sixth aspect of embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In embodiments of this application, after the to-be-processed image is obtained, the to-be-processed image may be input into the target model, to process the to-be-processed image by using the target model, so as to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

**BRIEF** DESCRIPTION OF DRAWINGS

FIG. 1 is a schematic diagram of a structure of an artificial intelligence main framework;
FIG. 2a is a schematic diagram of a structure of a visual task processing system according to an embodiment of this application;
FIG. 2b is another schematic diagram of a structure of a visual task processing system according to an embodiment of this application;
FIG. 2c is a schematic diagram of a visual task processing related device according to an embodiment of this application;
FIG. 3 is a schematic diagram of an architecture of a system 100 according to an embodiment of this application;
FIG. 4 is a schematic diagram of a structure of a target model according to an embodiment of this application;
FIG. 5 is another schematic diagram of a structure of a target model according to an embodiment of this application;
FIG. 6 is a schematic flowchart of a visual task processing method according to an embodiment of this application;
FIG. 7 is another schematic diagram of a structure of a target model according to an embodiment of this application;

FIG. 8 is another schematic flowchart of a visual task processing method according to an embodiment of this application;

FIG. 9 is another schematic diagram of a structure of a target model according to an embodiment of this application;

FIG. 10 is another schematic flowchart of a visual task processing method according to an embodiment of this application;

FIG. 11 is another schematic diagram of a structure of a target model according to an embodiment of this application;

FIG. 12 is a schematic flowchart of a model training method according to an embodiment of this application;

FIG. 13 is a schematic diagram of a structure of a visual task processing apparatus according to an embodiment of this application;

FIG. 14 is a schematic diagram of a structure of a model training apparatus according to an embodiment of this application;

FIG. 15 is a schematic diagram of a structure of an execution device according to an embodiment of this application;

FIG. 16 is a schematic diagram of a structure of a training device according to an embodiment of this application; and

FIG. 17 is a schematic diagram of a structure of a chip according to an embodiment of this application.

## DESCRIPTION OF EMBODIMENTS

Embodiments of this application provide a visual task processing method and a related device thereof. A to-be-processed image may be processed by using a target model, and features finally output by the target model may remain diversified, to help improve processing precision of a visual task for the to-be-processed image.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner for describing objects having a same attribute in embodiments of this application. In addition, the terms "include", "have", and any other variant thereof mean to cover non-exclusive inclusion, so that a process, method, system, product, or device that includes a series of units is not necessarily limited to those units, but may include other units not expressly listed or inherent to such a process, method, system, product, or device.

With the rapid development of computer technologies, graph neural networks are widely used for processing various computer vision tasks, for example, visual tasks in various fields such as image classification in the field of facial recognition, target detection in the field of video surveillance, and semantic segmentation in the field of autonomous driving.

Currently, when a visual task for a to-be-processed image needs to be processed, the to-be-processed image may be input into a graph neural network for processing, to obtain a feature that is of the to-be-processed image and that is output by the graph neural network, so as to complete the visual task for the to-be-processed image based on the feature of the to-be-processed image. For example, assuming that image classification needs to be performed on an image, the image may be input into a graph neural network, to perform a series of processing such as feature aggregation and feature update on the image by using the graph neural network, so as to obtain a feature of the image. However, the feature of the image may be input into a subsequent classification model (for example, a neural network other than a graph neural network), to obtain a processing result for the image, that is, a probability that the image belongs to each category. Therefore, a category to which the image belongs may be determined.

In the foregoing process, the to-be-processed image is input into the graph neural network in a graph structure manner, and the graph structure includes a plurality of nodes, that is, a plurality of pixels of the to-be-processed image. In a process of processing the graph structure by the graph neural network, feature aggregation between nodes is continuously performed, causing features of adjacent nodes to be increasingly similar. Consequently, features that are of the plurality of nodes and that are finally output by the graph neural network (that is, the feature that is of the to-be-processed image and that is output by the graph neural network) are excessively similar, and diversity of the features is lost, affecting processing precision of a visual task.

Further, because a pixel of the to-be-processed image is used as a node in the graph structure, a quantity of nodes in the graph structure is extremely large. For example, a graph structure of a to-be-processed image with a size of $224 \times 224$ includes 50176 nodes. When processing the graph structure, the graph neural network needs to process the 50176 nodes, and a required calculation amount is quite large. As a result, it is difficult to use the graph neural network in some devices with limited computing power.

Furthermore, in the conventional technology, the to-be-processed image may be manually selected, and some key pixels are selected from the to-be-processed image as nodes in the graph structure. In this way, a calculation amount of the graph neural network can be reduced. However, in such a manner of manually selecting a node, not only a relatively large quantity of human subjective factors exist, but also some of original information of the to-be-processed image is lost in network input, and finally, processing precision of a visual task is affected.

To resolve the foregoing problem, an embodiment of this application provides a digest generation method. The method may be implemented with reference to an artificial intelligence (artificial intelligence, AI) technology. The AI technology is a technical discipline that uses digital computers or machines controlled by digital computers to simulate, extend, and extend human intelligence. The AI technology obtains the best results by sensing the environment, obtaining knowledge, and using knowledge. In other words, the artificial intelligence technology is a branch of computer science, and seeks to learn essence of intelligence and produce a new intelligent machine that can react in a way similar to artificial intelligence. Using artificial intelligence to process data is a common application manner of artificial intelligence.

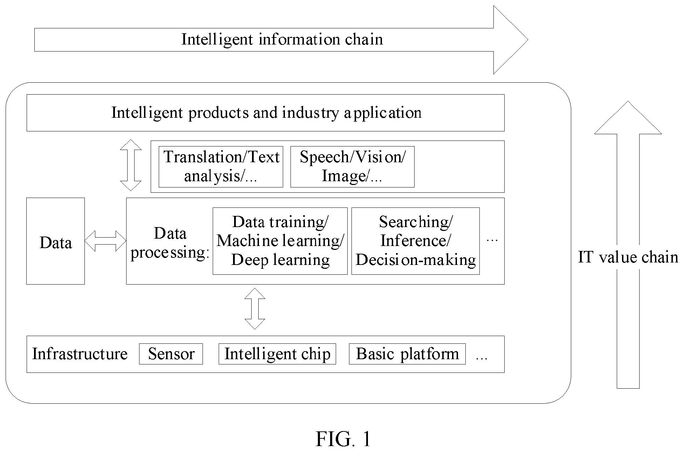

An overall working procedure of an artificial intelligence system is first described. FIG. 1 is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, speech, and text, and further relates to Internet of Things data of a conventional device, including service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision making is a process of making a decision after intelligent information is inferred, and usually provides functions such as classification, sorting, and prediction.

(4) General capability

After data processing mentioned above is performed on data, some general capabilities may be further formed based on a data processing result, for example, an algorithm or a general system, such as translation, text analysis, computer vision processing, speech recognition, and image recognition.

(5) Intelligent products and industry application

The intelligent products and industry application are products and application of the artificial intelligence system in various fields and are encapsulation of the overall artificial intelligence solution and product implementation of intelligent information decision-making, to implement final application. Application fields of the intelligent products and industry application mainly include: intelligent terminals, intelligent transportation, intelligent health care, autonomous driving, smart cities, and the like.

The following describes several application scenarios of this application.

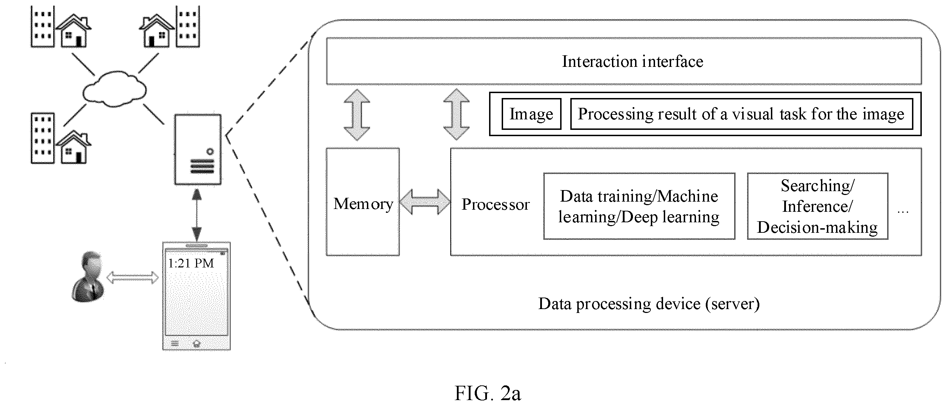

FIG. 2a is a schematic diagram of a structure of a visual task processing system according to an embodiment of this application. The visual task processing system includes user equipment and a data processing device. The user equipment includes a mobile phone, a personal computer, an information processing center, or another intelligent terminal. The user equipment is an initiator of visual task processing, and is used as an initiator of a visual task processing request. Generally, a user initiates a request by using the user equipment.

The data processing device may be a device or a server that has a data processing function, such as a cloud server, a network server, an application server, or a management server. The data processing device receives the visual task processing request from the intelligent terminal by using an interaction interface, and then performs visual task processing in a manner such as machine learning, deep learning, searching, inference, and decision-making by using a memory that stores data and a processor that processes data. The memory in the data processing device may be a general name, and includes a local storage and a database that stores historical data. The database may be on the data processing device, or may be on another network server.

In the visual task processing system shown in FIG. 2a, the user equipment may receive an instruction of the user. For example, the user equipment may obtain an image input/selected by the user, and then initiate a visual task processing request for the image to the data processing device, so that the data processing device performs an image processing application for the image obtained by the user equipment, to obtain a processing result for the image. For example, the user equipment may obtain an image input by the user, and then initiate a visual task processing request for the image to the data processing device, so that the data processing device processes the image, to obtain a processing result of the visual task for the image. For example, assuming that the visual task for the image is image classification, the processing result of the visual task for the image is a probability that the image belongs to each category. Therefore, a category to which the image belongs may be determined. For another example, assuming that the visual task for the image is target detection, a processing result of the visual task for the image is a probability that the target object is located at each position in the image. Therefore, a position of the target object in the image, and the like may be determined.

In FIG. 2a, the data processing device may perform the visual task processing method in embodiments of this application.

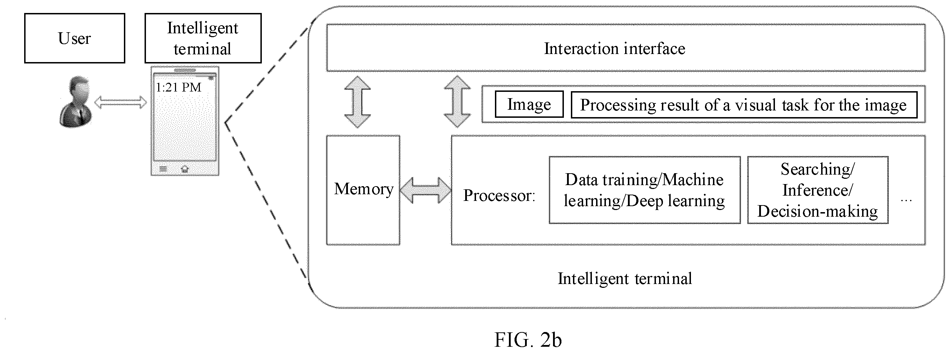

FIG. 2b is another schematic diagram of a structure of a visual task processing system according to an embodiment of this application. In FIG. 2b, user equipment is directly used as a data processing device. The user equipment can directly obtain an input from a user, and the input is directly processed by hardware of the user equipment. A specific process is similar to that in FIG. 2a. For details, refer to the foregoing descriptions. Details are not described herein again.

In the visual task processing system shown in FIG. 2b, the user equipment may receive an instruction of the user. For example, the user equipment may obtain an image selected by the user from the user equipment, and then the user equipment directly executes an image processing application on the image, to obtain a processing result of a visual task for the image. For example, assuming that the visual task for the image is image classification, the processing result of the visual task for the image is a probability that the image belongs to each category. Therefore, a category to which the image belongs may be determined. For another example, assuming that the visual task for the image is target detection, a processing result of the visual task for the image is a probability that the target object is located at each position in the image. Therefore, a position of the target object in the image, and the like may be determined.

In FIG. 2b, the user equipment may perform the visual task processing method in embodiments of this application by itself.

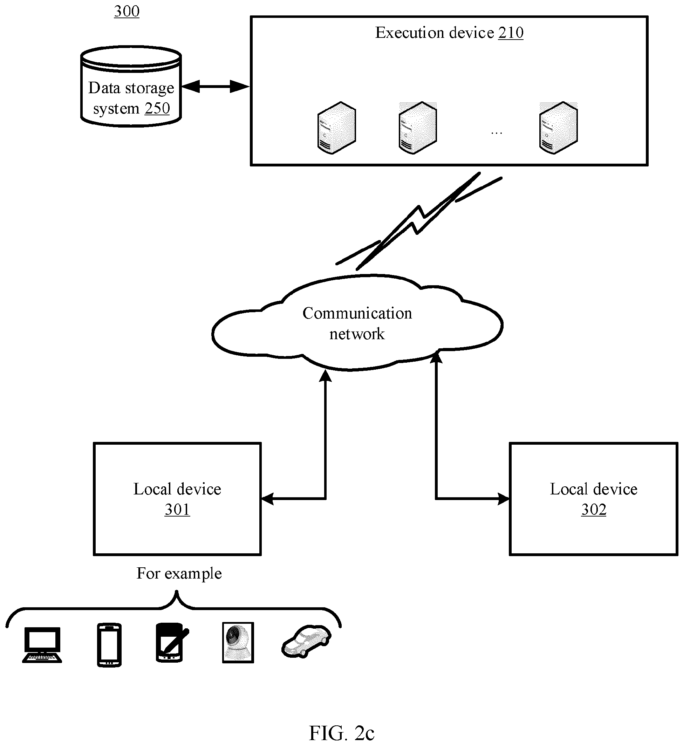

FIG. 2c is a schematic diagram of a visual task processing related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform an image processing application on an image by using a final model that is obtained through data training or learning, to obtain a corresponding processing result.

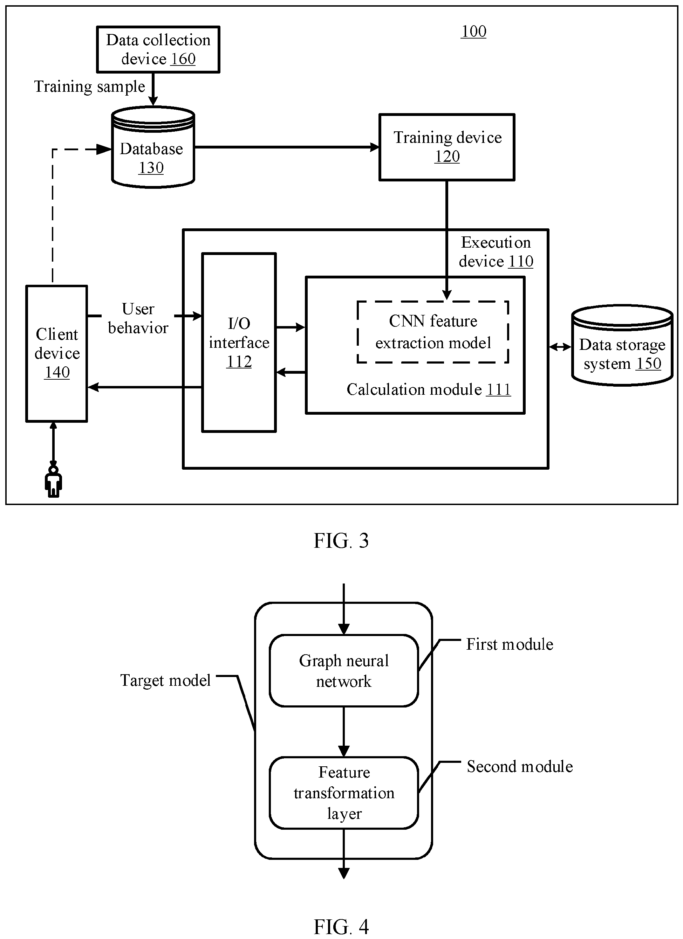

FIG. 3 is a schematic diagram of an architecture of a system 100 according to an embodiment of this application. In FIG. 3, an execution device 110 is provided with an input/output (input/output, I/O) interface 112, configured to exchange data with an external device. A user may input data to the I/O interface 112 by using a client device 140. The input data in embodiments of this application may include: each to-be-scheduled task, a resource that can be invoked, and another parameter.

In a process in which the execution device 110 preprocesses the input data, or in a process in which a calculation module 111 of the execution device 110 performs related processing such as computing (for example, performs function implementation of a neural network in this application), the execution device 110 may invoke data, code, and the like in a data storage system 150 for corresponding processing, and may also store, into the data storage system 150, data, an instruction, and the like that are obtained through the corresponding processing.

Finally, the I/O interface 112 returns a processing result to the client device 140, to provide the processing result for the user.

It should be noted that, for different objectives or different tasks, a training device 120 may generate corresponding target model/rules based on different training data, where the corresponding target model/rules may be used to achieve the foregoing objectives or complete the foregoing tasks, thereby providing required results for the user. The training data may be stored in a database 130, and is derived from training samples collected by a data collection device 160.

In a case shown in FIG. 3, the user may manually input data, and the user may manually input the data by using an interface provided by the I/O interface 112. In another case, the client device 140 may automatically send the input data to the I/O interface 112. If the client device 140 is required to obtain authorization of the user before automatically sending the input data, the user may set a corresponding permission in the client device 140. The user may view, on the client device 140, a result output by the execution device 110, and a specific presentation form may be a specific manner such as display, sound, or action. The client device 140 may alternatively be used as a data collection end, to collect, as new sample data, input data input into the I/O interface 112 and an output result output from the I/O interface 112 that are shown in the figure, and store the new sample data into the database 130. Certainly, the client device 140 may alternatively not perform collection. Instead, the I/O interface 112 directly stores, into the database 130 as new sample data, the input data input into the I/O interface 112 and the output result output from the I/O interface 112 that are shown in the figure.

It should be noted that FIG. 3 is merely a schematic diagram of a system architecture according to an embodiment of this application. A position relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural-network process unit NPU. The chip may be disposed in the execution device 110 shown in FIG. 3, to complete calculation work of the calculation module 111. The chip may alternatively be disposed in the training device 120 shown in FIG. 3, to complete training work of the training device 120 and output a target model/rule.

The neural-network process unit NPU is mounted to a host central processing unit (central processing unit, CPU) (host CPU) as a coprocessor, and the host CPU assigns a task. A core part of the NPU is an operation circuit, and a controller controls the operation circuit to extract data in a memory (a weight memory or an input memory) and perform an operation.

In some implementations, the operation circuit includes a plurality of processing units (process engine, PE) inside. In some implementations, the operation circuit is a two-dimensional systolic array. The operation circuit may alternatively be a one-dimensional systolic array or another electronic circuit that can perform mathematical operation such as multiplication and addition. In some implementations, the operation circuit is a general-purpose matrix processor.

For example, it is assumed that there is an input matrix A, a weight matrix B, and an output matrix C. The operation circuit obtains data corresponding to the matrix B from a weight memory, and buffers the data on each PE in the operation circuit. The operation circuit obtains data of the matrix A from an input memory and performs matrix operation with the matrix B, and stores a partial result or a final result of an obtained matrix into an accumulator (accumulator).

A vector calculation unit may perform further processing on an output of the operation circuit, for example, vector multiplication, vector addition, exponential operation, logarithm operation, and size comparison. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store processed output vectors into a unified buffer. For example, the vector calculation unit may apply a non-linear function to the output of the operation circuit, such as vectors whose values are accumulated, to generate an activation value. In some implementations, the vector calculation unit generates a normalized value, a merged value, or both. In some implementations, the processed output vectors can be used as an activation input to the operation circuit, for example, for use in subsequent layers in the neural network.

A unified memory is configured to store input data and output data.

For weight data, a storage unit access controller (direct memory access controller, DMAC) directly transfers input data in the external memory to the input memory and/or the unified memory, stores, into the weight memory, weight data in the external memory, and stores, into the external memory, data in the unified memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions buffered in the instruction fetch buffer, to control a working process of the operation accelerator.

Usually, the unified memory, the input memory, the weight memory, and the instruction fetch buffer are all on-chip (On-Chip) memories. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neural unit. The neural unit may be an operation unit that uses xs and an intercept of 1 as an input. An output of the operation unit may be as follows:

$$h_{W,b}\left(x\right) = f\left(W^{T}x\right) = f\left(\sum\nolimits_{s=1}^{n} W_s x_s + b\right) \tag{1}$$

where s=1, 2, ..., n, n is a natural number greater than 1, Ws is a weight of xs, and b is a bias of the neural unit. f is an activation function (activation function) of the neural unit, and is used to introduce a non-linear characteristic into the neural network, to convert an input signal in the neural unit into an output signal. The output signal of the activation function may serve as an input of a next convolutional layer. The activation function may be a sigmoid function. The neural network is a network formed by connecting many single neural units together. To be specific, an output of a neural unit may be an input of another neural unit. An input of each neural unit may be connected to a local receptive field of a previous layer, to extract a feature of the local receptive field. The local receptive field may be a region including several neural units.

Work at each layer of the neural network may be described by using a mathematical expression $y = a(Wx + b)$. From a physical layer, work at each layer of the neural network may be understood as completing transformation from input space to output space (namely, from row space to column space of a matrix) by performing five operations on the input space (a set of input vectors). The five operations include: 1: dimension increasing/dimension reduction; 2: scaling up/scaling down; 3: rotation; 4: translation; and 5: "bending". The operation 1, the operation 2, and the operation 3 are performed by $Wx$, the operation 4 is performed by $+b$, and the operation 5 is performed by $a()$. The word "space" is used herein for expression because a classified object is not a single thing, but a type of thing. Space is a set of all individuals of this type of thing. $W$ is a weight vector, and each value in the vector indicates a weight value of a neuron at this layer of the neural network. The vector $W$ determines space transformation from the input space to the output space described above. In other words, a weight $W$ at each layer controls how to transform space. An objective of training the neural network is to finally obtain weight matrices (weight matrices formed by vectors $W$ at a plurality of layers) at all layers of a trained neural network. Therefore, a training process of the neural network is essentially a manner of learning of control of space transformation, and more specifically, learning of a weight matrix.

Because it is expected that an output of the neural network is close, to the greatest extent, to a value that is actually expected to be predicted, a current predicted value of the network may be compared with a target value that is actually expected, and then a weight vector at each layer of the neural network is updated based on a difference between the current predicted value and the target value (certainly, there is usually an initialization process before the first update, that is, parameters are preconfigured for each layer of the neural network). For example, if the predicted value of the network is high, the weight vector is adjusted to lower the predicted value until the neural network can predict the target value that is actually expected. Therefore, "how to obtain, through comparison, a difference between a predicted value and a target value" needs to be predefined. In this case, a loss function (loss function) or an objective function (objective function) needs to be used. The loss function and the objective function are important equations used to measure a difference between a predicted value and a target value. The loss function is used as an example. A higher output value (loss) of the loss function indicates a larger difference. Therefore, training of the neural network is a process of minimizing the loss.

(2) Back propagation algorithm

In a training process, a neural network may correct values of parameters in an initial neural network model by using an error back propagation (back propagation, BP) algorithm, so that a reconstruction error loss of the neural network model becomes increasingly small. Specifically, an input signal is forward transferred until the error loss is generated in an output, and the parameters in the initial neural network model are updated through back propagation of information about the error loss, to converge the error loss. The back propagation algorithm is an error-loss-centered back propagation motion intended to obtain parameters, such as a weight matrix, of an optimal neural network model.

The following describes the method provided in this application from a neural network training side and a neural network application side.

The model training method provided in embodiments of this application relates to data sequence processing, and may be specifically applied to a method such as data training, machine learning, or deep learning, to perform symbolized and formalized intelligent information modeling, extraction, preprocessing, training, and the like on training data (for example, a to-be-processed image in the model training method provided in embodiments of this application), and finally obtain a trained neural network (for example, a target model in the model training method provided in embodiments of this application). In addition, in the visual task processing method provided in embodiments of this application, input data (for example, the to-be-processed image in the visual task processing method provided in embodiments of this application) may be input into the trained neural network by using the foregoing trained neural network, to obtain output data (for example, a feature of the to-be-processed image in the visual task processing method provided in embodiments of this application). It should be noted that, the model training method and the visual task processing method provided in embodiments of this application are inventions generated based on a same idea, or may be understood as two parts in a system, or two phases: such as a model training phase and a model application phase, of an overall procedure.

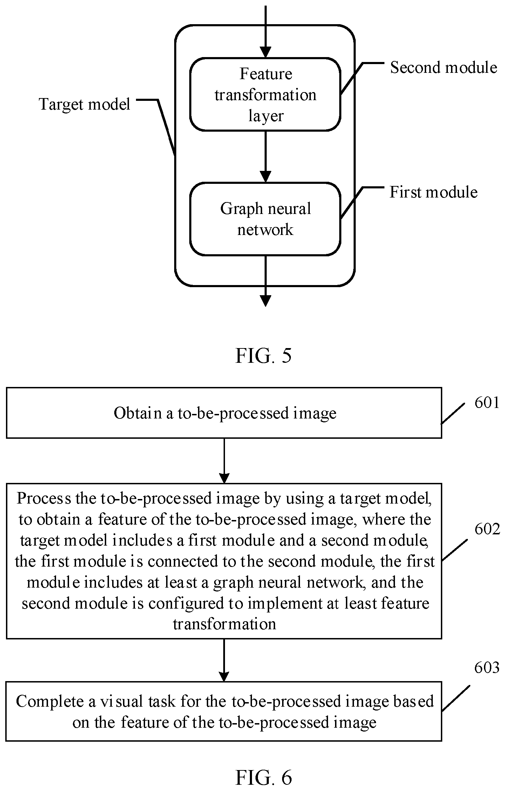

The visual task processing method provided in embodiments of this application may be implemented by using a target model. The target model may have a plurality of structures, which are separately described below. The first structure of the target model is first described. In this case, the target model includes one first module and one second module, and the first module is connected to the second module. It should be noted that, there are two connection relationships between the first module and the second module. The first connection relationship is shown in FIG. 4 (FIG. 4 is a schematic diagram of a structure of a target model according to an embodiment of this application). In this case, an input end of the first module is an input end of the entire target model, an output end of the first module is connected to an input end of the second module, and an output end of the second module is an output end of the entire target model. The second connection relationship is shown in FIG. 5 (FIG. 5 is another schematic diagram of a structure of a target model according to an embodiment of this application). In this case, an input end of the second module is an input end of the entire target model, an output end of the second module is connected to an input end of the first module, and an output end of the first module is an output end of the entire target model. The first module includes a graph neural network (that is, the first module is configured to implement feature aggregation), and the second module includes a feature transformation layer (that is, the second module is configured to implement feature transformation). The following describes a working procedure of a target model with the first structure. As shown in FIG. 6 (FIG. 6 is a schematic flowchart of a visual task processing method according to an embodiment of this application), the procedure includes the following steps.

601: Obtain a to-be-processed image.

In this embodiment, when a visual task for a to-be-processed image needs to be processed, the to-be-processed image may be first obtained. The to-be-processed image may be a frame of image in a video stream, or may be an independent image. This is not limited herein.

Specifically, the visual task for the to-be-processed image may include at least one of the following: an image classification task for the to-be-processed image in the field of facial recognition (for example, when performing facial recognition, a door status control device needs to determine whether a collected image is a face image), a target detection task for the to-be-processed image in the field of video surveillance (for example, when monitoring a target object, a surveillance device may detect whether an image in a collected video stream includes a target object), a semantic segmentation task for the to-be-processed image in the field of autonomous driving (for example, in an autonomous driving process of a vehicle, an image of a road surface may be shot and the image may be segmented, to determine various objects on the road surface, so that the vehicle travels in a correct area), an image denoising task for the to-be-processed image in the field of image (video) processing, an image super-resolution (image super-resolution) task for the to-be-processed image in the field of image (video) processing, and the like.

602: Process the to-be-processed image by using the target model, to obtain a feature of the to-be-processed image, where the target model includes the first module and the second module, the first module is connected to the second module, the first module includes at least the graph neural network, and the second module is configured to implement at least feature transformation.

After the to-be-processed image is obtained, the to-be-processed image may be input into the target model (that is, a trained neural network model), to process the to-be-processed image by using the target model, so as to obtain the feature of the to-be-processed image (which may also be referred to as a final feature of the to-be-processed image).

Further, to prevent a calculation amount of the target model from being excessively large, before the to-be-processed image is input into the target model, the to-be-processed image may be preprocessed in advance.

(1) After the to-be-processed image is obtained, the to-be-processed image may be divided (which may be evenly divided or may be unevenly divided), to obtain P patches (patches), where P is a positive integer greater than 1. It should be noted that, in the P patches, there may be an overlapping part or may not be an overlapping part between any two adjacent patches. This is not limited herein.

(2) After the P patches are obtained, for any one of the P patches, that is, for an $i^{th}$ patch (i=1, ..., P), the $i^{th}$ patch may be mapped to hidden space, so as to obtain a vector representation of the $i^{th}$ patch. An operation similar to that performed on the $i^{th}$ patch may also be performed on a patch other than the $i^{th}$ patch in the P patches. Therefore, vector representations of the P patches can be obtained. For example, the to-be-processed image may be divided into P patches. Then, the first patch may be mapped, to obtain a vector representation $x_1$ of the first patch, the second patch may be further mapped, to obtain a vector representation $x_2$ of the second patch, ..., and the $P^{th}$ patch may be further mapped, to obtain a vector representation $x_P$ of the $P^{th}$ patch, where $x_i \in R^D$.

(3) After the vector representations of the P patches are obtained, an initial feature of the to-be-processed image may be constructed by using the vector representations of the P patches. Still as in the foregoing example, after the vector representation $x_1$ of the first patch, the vector representation $x_2$ of the second patch, ..., and the vector representation $x_P$ of the $P^{th}$ patch are obtained, the P vector representations may be combined together, to obtain a vector representation of the to-be-processed image $X_1=[x_1, x_2, ..., x_P]$ as the initial feature $X_1$ of the to-be-processed image.

In this case, after the initial feature of the to-be-processed image is obtained, the initial feature of the to-be-processed image may be input into the target model, to process the initial feature of the to-be-processed image by using the target model, so as to obtain the feature of the to-be-processed image (that is, the final feature of the to-be-processed image).

Further, to enable the feature of the to-be-processed image to have more information, before the initial feature of the to-be-processed image is constructed based on the vector representations of the P patches, the following operations may be further performed:

(1) After the vector representations of the P patches are obtained, positional encoding of the P patches may be first obtained, where the positional encoding of the P patches may be a set of positional encoding set in advance. For the $i^{th}$ patch, positional encoding of the $i^{th}$ patch indicates a position of the $i^{th}$ patch in the to-be-processed image, that is, a value of the positional encoding of the $i^{th}$ patch is determined by the position of the $i^{th}$ patch in the to-be-processed image. Therefore, positional encoding of different patches is usually different. Still as in the foregoing example, positional encoding of the first patch is $e_1$, positional encoding of the second patch is $e_2$, ..., and positional encoding of the $P^{th}$ patch is $e_P$, where $e_i \in R^D$.

(2) After the positional encoding of the P patches is obtained, because the vector representations of the P patches are in a one-to-one correspondence with the positional encoding of the P patches, for the $i^{th}$ patch, the positional encoding of the $i^{th}$ patch and the vector representation of the $i^{th}$ patch may be added to obtain a vector representation that is of the $i^{th}$ patch and that is obtained through processing. An operation similar to that performed on the $i^{th}$ patch may also be performed on a patch other than the $i^{th}$ patch in the P patches. Therefore, vector representations that are of the P patches and that are obtained through processing can be obtained. Still as in the foregoing example, the vector representation $x_1$ of the first patch and the positional encoding $e_1$ of the first patch may be added, to obtain a vector representation $x_1+e_1$ that is of the first patch and that is obtained through processing, the vector representation $x_2$ of the second patch and the positional encoding $e_2$ of the second patch may be further added, to obtain a vector representation $x_2+e_2$ that is of the second patch and that is obtained through processing, ..., and the vector representation $x_P$ of the $P^{th}$ patch and the positional encoding $e_P$ of the $P^{th}$ patch may be further added, to obtain a vector representation $x_P+e_P$ that is of the $P^{th}$ patch and that is obtained through processing.

In this case, after the vector representations that are of the P patches and that are obtained through processing are obtained, the initial feature of the to-be-processed image may be constructed by using the vector representations of the P patches. Still as in the foregoing example, after the vector representation $x_1+e_1$ that is of the first patch and that is obtained through processing, the vector representation $x_2+e_2$ that is of the second patch and that is obtained through processing, ..., and the vector representation $x_P+e_P$ that is of the $P^{th}$ patch and that is obtained through processing are obtained, the P vector representations may be combined together, to obtain the vector representation of the to-be-processed image $X_1=[x_1+e_1, x_2+e_2, ..., x_P+e_P]$ as the initial feature $X_1$ of the to-be-processed image.

In this way, after the initial feature that is of the to-be-processed image and that is constructed based on the vector representations that are of the P patches and that are obtained through processing is obtained, the initial feature of the to-be-processed image may be input into the target model, to process the initial feature of the to-be-processed image by using the target model, so as to obtain the feature of the to-be-processed image. Specifically, the target model may obtain the feature of the to-be-processed image in a plurality of manners:

(1) Because the to-be-processed image may be considered as a graph structure, the P patches obtained by dividing the to-be-processed image may be considered as P nodes in the graph structure. Correspondingly, the vector representations that are of the P patches and that are obtained through processing are features of the P nodes in the graph structure. In this case, when the initial feature of the to-be-processed image is input into the target model shown in FIG. 4, because the initial feature of the to-be-processed image includes the vector representations that are of the P patches and that are obtained through processing, it is equivalent to that the features of the P nodes in the graph structure are input into the target model.

(1.1) After the first module of the target model receives the initial feature of the to-be-processed image, that is, after the first module receives the features of the P nodes in the graph structure, the first module may perform feature aggregation and feature update on the features of the P nodes in the graph structure, to obtain updated features of the P nodes, that is, updated vector representations of the P patches. The following describes processes of feature aggregation and feature update:

(1.1.1) For the $i^{th}$ node, neighboring nodes of the $i^{th}$ node are first determined. It should be noted that, the Euclidean distance between the nodes may be used as a metric herein, and several nodes closest to the $i^{th}$ node are selected from a plurality of nodes around the $i^{th}$ node as the neighboring nodes of the $i^{th}$ node. Still as in the foregoing example, a set of the neighboring nodes of the $i^{th}$ node may be represented as N(i).

(1.1.2) After the neighboring nodes of the $i^{th}$ node are determined, feature aggregation may be performed on features of the neighboring nodes of the $i^{th}$ node, to obtain an aggregated feature corresponding to the $i^{th}$ node. Still as in the foregoing example, a feature of the $i^{th}$ node is $x_i$, and the aggregated feature corresponding to the $i^{th}$ node is $g(x_i, N(i), W_1)$. $W_1$ is a weight used in an aggregation process, and g() may be expressed in a plurality of forms, for example, $g(x_i, N(i), W_1)=\max(x_i\_x_j|j\in N(i))$.

(1.1.3) After the aggregated feature corresponding to the $i^{th}$ node is obtained, feature update may be performed on the feature of the $i^{th}$ node based on the feature of the $i^{th}$ node and the aggregated feature corresponding to the $i^{th}$ node, to obtain an updated feature of the $i^{th}$ node, that is, an updated vector representation of the $i^{th}$ patch. Still as in the foregoing example, the updated feature of the $i^{th}$ node is $x'_i=h(x_i, g(x_i, N(i), W_1), W_2)$. $W_2$ is a weight used in an update process, and h() may be expressed in a plurality of forms, for example, $h(x_i, g(x_i, N(i), W_1), W_2)=x'_i=g(x_i, N(i), W_1)*W_2$.

(1.1.4) The first module may also perform, on a node other than the $i^{th}$ node, an operation similar to that performed on the $i^{th}$ node, so as to obtain updated features of the P nodes, and send the updated features of the P nodes to the second module.

(1.2) After receiving the updated features of the P nodes from the first module, the second module may perform feature transformation on the updated features of the P nodes, to obtain features that are of the P nodes and that are obtained through transformation. It should be noted that, for the updated feature of the $i^{th}$ node, the second module may modify values of elements in the updated feature of the $i^{th}$ node (for example, values of some elements become smaller, and values of some elements become larger). Therefore, a feature that is of the $i^{th}$ node and that is obtained through transformation, that is, a vector representation that is of the $i^{th}$ patch and that is obtained through transformation can be obtained. The first module may also perform, on an updated feature of a node other than the updated feature of the $i^{th}$ node, an operation similar to that performed on the updated feature of the $i^{th}$ node. Therefore, the features that are of the P nodes and that are obtained through transformation, that is, vector representations that are of the P patches and that are obtained through transformation can be obtained. In this case, the vector representations that are of the P patches and that are obtained through transformation may be used as the output of the target model, that is, the (final) feature of the to-be-processed image.

It may be understood that, because feature transformation is performed on the updated features of the P nodes, a difference between the features that are of the P nodes and that are obtained through transformation may increase. To be specific, there are relatively many different elements between the feature that is of the first node and that is obtained through transformation and the feature that is of the second node and that is obtained through transformation, there are relatively many different elements between the feature that is of the second node and that is obtained through transformation and the feature that is of the third node and that is obtained through transformation, ..., and there are relatively many different elements between the feature that is of the $(P-1)^{th}$ node and that is obtained through transformation and the feature that is of the $P^{th}$ node and that is obtained through transformation.

(2) Because the to-be-processed image may be considered as a graph structure, the P patches obtained by dividing the to-be-processed image may be considered as P nodes in the graph structure. Correspondingly, the vector representations that are of the P patches and that are obtained through processing are features of the P nodes in the graph structure. In this case, when the initial feature of the to-be-processed image is input into the target model shown in FIG. 5, because the initial feature of the to-be-processed image includes the vector representations that are of the P patches and that are obtained through processing, it is equivalent to that the features of the P nodes in the graph structure are input into the target model.

(2.1) After the second module of the target model receives the initial feature of the to-be-processed image, that is, after the second module receives the features of the P nodes in the graph structure, the second module may perform feature transformation on the features of the P nodes in the graph structure, to obtain features that are of the P nodes and that are obtained through transformation, that is, vector representations that are of the P patches and that are obtained through transformation, and send the features that are of the P nodes and that are obtained through transformation to the first module. It should be noted that, for a description of feature transformation performed by the second module in (2.1), refer to a related description part of feature transformation performed by the second module in (1.2). Details are not described herein again.

(2.2) After receiving the features that are of the P nodes and that are obtained through transformation from the second module, the first module may perform feature aggregation and feature update on the features that are of the P nodes and that are obtained through transformation, to obtain updated features of the P nodes, that is, updated vector representations of the P patches. In this case, the updated vector representations of the P patches may be used as the output of the target model, that is, the (final) feature of the to-be-processed image. It should be noted that, for a description of feature transformation and feature update performed by the first module in (2.2), refer to a related description part of feature transformation and feature update performed by the first module in (1.1). Details are not described herein again.

It should be understood that, in this embodiment, only an example in which the graph neural network can implement feature aggregation and feature update is used for description, and a function of the graph neural network is not limited. In actual application, the graph neural network may alternatively implement only feature aggregation. In this case, for the $i^{th}$ node, after the aggregated feature corresponding to the $i^{th}$ node is obtained, the aggregated feature corresponding to the $i^{th}$ node may be directly determined as the updated feature of the $i^{th}$ node.

It should be further understood that, in this embodiment, only an example in which the initial feature of the to-be-processed image input into the target model includes the vector representations that are of the P patches and that are obtained through processing is used for description. In actual application, the initial feature of the to-be-processed image input into the target model may alternatively include the vector representations of the P patches (that is, no positional encoding is added). In this case, the P patches are still P structures in the graph structure, and the vector representations of the P patches are features of the P nodes in the graph structure.

It should be further understood that, in this embodiment, only an example in which the input of the target model is the initial feature of the to-be-processed image is used for description. In actual application, the input of the target model may alternatively be the to-be-processed image. In this case, a plurality of pixels of the to-be-processed image are a plurality of nodes in the graph structure, and information such as pixel values of the plurality of pixels of the to-be-processed image is features of the plurality of nodes in the graph structure.

603: Complete the visual task for the to-be-processed image based on the feature of the to-be-processed image.

After the feature of the to-be-processed image is obtained, the feature of the to-be-processed image may be input into another model (which is also a trained neural network model) other than the target model, to further process the feature of the to-be-processed image by using the another model, to obtain a processing result of the visual task for the to-be-processed image. In this case, the visual task for the to-be-processed image is completed.

For example, assuming that the visual task for the to-be-processed image is image classification for the to-be-processed image, after the feature of the to-be-processed image is obtained, the feature of the to-be-processed image may be input into a classification model, to further process the feature of the to-be-processed image by using the classification model, so as to obtain a classification result of the to-be-processed image, that is, a probability that the to-be-processed image belongs to each category. Therefore, a category to which the to-be-processed image belongs can be determined.

For another example, assuming that the visual task for the to-be-processed image is target detection for the to-be-processed image, after the feature of the to-be-processed image is obtained, the feature of the to-be-processed image may be input into a detection model, to further process the feature of the to-be-processed image by using the detection model, so as to obtain a detection result of the to-be-processed image, that is, a probability that a target object is located at each position in the to-be-processed image. Therefore, a position of the target object in the to-be-processed image can be determined.

In this embodiment of this application, after the to-be-processed image is obtained, the to-be-processed image may be input into the target model, to process the to-be-processed image by using the target model, so as to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

Further, in this embodiment of this application, a patch of the to-be-processed image may be used as a node in the graph structure, so that a quantity of nodes in the graph structure can be effectively reduced. For example, the to-be-processed image is divided into 100 patches, the graph structure corresponding to the to-be-processed image includes 100 nodes, and the graph neural network of the first module in the target model needs to process only 100 nodes. This can effectively reduce a calculation amount required for the graph neural network, and help the target model be used in some devices with limited computing power.

Furthermore, in this embodiment of this application, a node in the graph structure does not need to be manually selected, and all patches that form the entire to-be-processed image are used as nodes in the graph structure. This not only can avoid a human factor, but also can ensure that all original information of the to-be-processed image exists in the input of the target model, so that processing precision of the visual task for the to-be-processed image can be further improved.

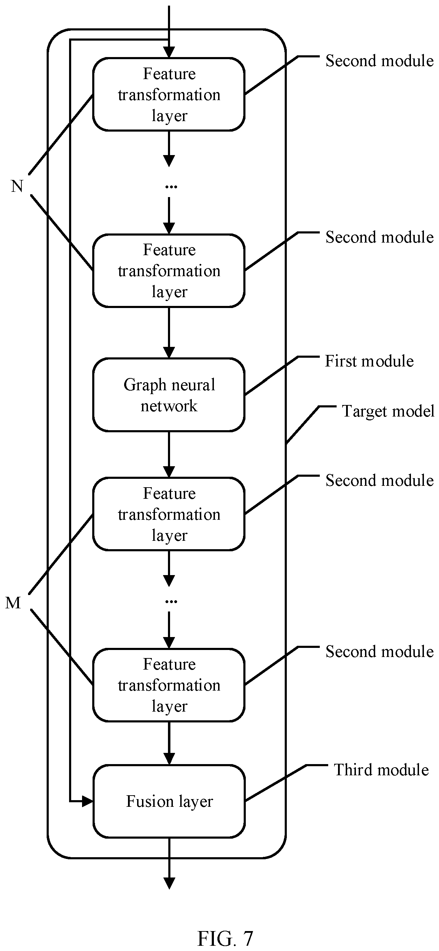

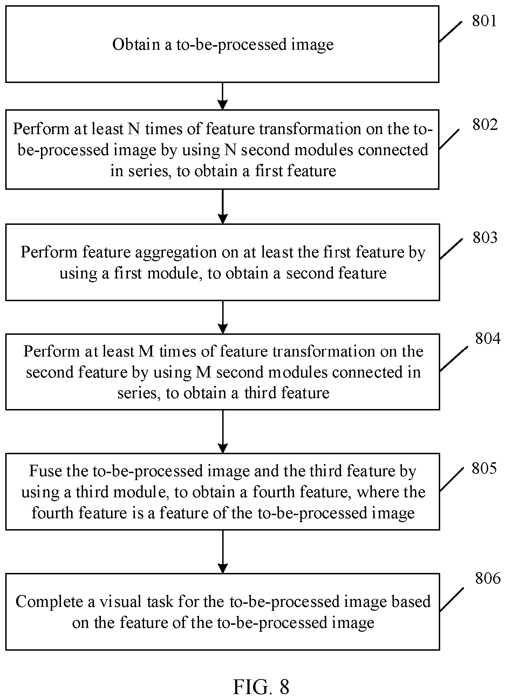

The first structure of the target model is described in detail above, and the second structure of the target model is described below. In this case, as shown in FIG. 7 (FIG. 7 is another schematic diagram of a structure of a target model according to an embodiment of this application), the target model includes one first module, N+M second modules (both N and M are positive integers greater than or equal to 1), and one third module. The N second modules connected in series are disposed before the first module, and the M second modules connected in series are disposed after the first module. For the N second modules located before the first module, an input end of the $1^{st}$ second module in the N second modules is used as the input end of the target model, and an output end of the $N^{th}$ second module in the N second modules is connected to the input end of the first module. For the M second modules located after the first module, an input end of the $1^{st}$ second module in the M second modules is connected to the output end of the first module, an output end of the $M^{th}$ second module in the M second modules is connected to a first input end of the third module, a second input end of the third module may also be used as the input end of the target model, and an output end of the third module is used as the output end of the target model. The first module includes the graph neural network (that is, the first module is configured to implement feature aggregation), each second module includes the feature transformation layer (that is, each second module is configured to implement feature transformation), and the third module includes a fusion layer. The following describes a working procedure of a target model with the second structure. As shown in FIG. 8 (FIG. 8 is another schematic flowchart of a visual task processing method according to an embodiment of this application), the procedure includes the following steps.

801: Obtain a to-be-processed image.

For a description of step 801, refer to a related description part of step 601 in the embodiment shown in FIG. 6. Details are not described herein again.

802: Perform at least N times of feature transformation on the to-be-processed image by using the N second modules connected in series, to obtain a first feature.

803: Perform feature aggregation on at least the first feature by using the first module, to obtain a second feature.

804: Perform at least M times of feature transformation on the second feature by using the M second modules connected in series, to obtain a third feature.

805. Fuse the to-be-processed image and the third feature by using the third module, to obtain a fourth feature, where the fourth feature is a feature of the to-be-processed image.

After the to-be-processed image is obtained, the to-be-processed image may be input into the target model. Because the to-be-processed image is input into the target model in a form of a graph structure, the target model may consider a plurality of pixels of the to-be-processed image as a plurality of nodes of the graph structure, and consider information such as pixel values of the plurality of pixels (included in the to-be-processed image) as features of the plurality of nodes. In this case, after receiving the features of the plurality of nodes, the $1^{st}$ second module of the N second modules in the target model may perform first feature transformation on the features of the plurality of nodes, to obtain features that are of the plurality of nodes and that are obtained through first transformation. After receiving the features of that are the plurality of nodes and that are obtained through first transformation, the 2nd second module of the N second modules may perform second feature transformation on the features that are of the plurality of nodes and that are obtained through first transformation, to obtain features that are of the plurality of nodes and that are obtained through second transformation, ...,

and after receiving features that are of the plurality of nodes and that are obtained through $(N-1)^{th}$ transformation, the $N^{th}$ second module of the N second modules may perform $N^{th}$ feature transformation on the features that are of the plurality of nodes and that are obtained through $(N-1)^{th}$ transformation, to obtain features that are of the plurality of nodes and that are obtained through $N^{th}$ transformation (that is, the foregoing first feature). Next, after receiving the features that are of the plurality of nodes and that are obtained through $N^{th}$ transformation, the first module may perform feature aggregation and feature update on the features that are of the plurality of nodes and that are obtained through $N^{th}$ transformation, to obtain updated features of the plurality of nodes (that is, the foregoing second feature). Then, after receiving the updated features of the plurality of nodes, the $1^{st}$ second module of the M second modules may perform $(N+1)^{th}$ transformation on the updated features of the plurality of nodes, to obtain features that are of the plurality of nodes and that are obtained through $(N+1)^{th}$ transformation, ..., and after receiving features that are of the plurality of nodes and that are obtained through $(N+M-1)^{th}$ transformation, the $M^{th}$ second module of the M second modules may perform $(N+M)^{th}$ transformation on the features that are of the plurality of nodes and that are obtained through $(N+M-1)^{th}$ transformation, to obtain features that are of the plurality of nodes and that are obtained through $(N+M)^{th}$ transformation (that is, the foregoing third feature). Finally, after receiving the features of the plurality of nodes and the features that are of the plurality of nodes and that are obtained through $(N+M)^{th}$ transformation, the third module may fuse the features of the plurality of nodes and the features that are of the plurality of nodes and that are obtained through $(N+M)^{th}$ transformation, to obtain features that are of the plurality of nodes and that are obtained through fusion (that is, the foregoing fourth feature). In this case, the features that are of the plurality of nodes and that are obtained through fusion may be used as the output of the target model, that is, the (final) feature of the to-be-processed image.

It should be understood that, in this embodiment, only an example in which the graph neural network of the first module can implement feature aggregation and feature update is used for description, and a function of the graph neural network is not limited. In actual application, the graph neural network may alternatively implement only feature aggregation.

It should be further understood that, in this embodiment, for a description of feature aggregation and feature update performed by the first module, refer to a related description part of feature aggregation and feature update performed by the first module in step 602. Details are not described herein again. Similarly, in this embodiment, for a description of feature transformation performed by each second module, refer to a related description part of feature transformation performed by the second module in step 602. Details are not described herein again.

It should be further understood that, in this embodiment, only an example in which the target model includes only one first module is used for description, and a quantity of first modules is not limited. In actual application, the target model may alternatively include L first modules (L is a positive integer greater than 1) connected in series, where an input end of the $1^{st}$ first module in the L first modules is connected to the output end of the $N^{th}$ second module of the N second modules, and an output end of the $L^{th}$ first module in the L first modules is connected to the input end of the $1^{st}$ second module of the M second modules. In this case, the L first modules may implement L times of feature aggregation. To be specific, after receiving the features that are of the plurality of nodes and that are obtained through $N^{th}$ transformation, the $1^{st}$ first module in the L first modules may perform feature aggregation and feature update on the features that are of the plurality of nodes and that are obtained through $N^{th}$ transformation, to obtain features that are of the plurality of nodes and that are obtained through first update, after receiving the features that are of the plurality of nodes and that are obtained through first update, the $2^{nd}$ first module may perform feature aggregation and feature update on the features that are of the plurality of nodes and that are obtained through first update, to obtain features that are of the plurality of nodes and that are obtained through first update, ..., and after receiving features that are of the plurality of nodes and that are obtained through $(L-1)^{th}$ update, the $L^{th}$ first module may perform feature aggregation and feature update on the features that are of the plurality of nodes and that are obtained through $(L-1)^{th}$ update, to obtain features that are of the plurality of nodes and that are obtained through $L^{th}$ update (that is, the second feature), and send the features that are of the plurality of nodes and that are obtained through $L^{th}$ update to the $1^{st}$ second module in the M second modules.

It should be further understood that, in this embodiment, the to-be-processed image may alternatively be preprocessed in advance. For a description of preprocessing herein, refer to a related description part of preprocessing in step 602. Details are not described herein again. In this case, after the to-be-processed image is preprocessed, an input of the target model changes to: an initial feature that is of the to-be-processed image and that is constructed based on vector representations of P patches, or an initial feature that is of the to-be-processed image and that is constructed based on vector representations that are of P patches and that are obtained through processing. In this case, the P (plurality of) nodes in the graph structure are the P patches of the to-be-processed image, and the features of the P nodes are the vector representations of the P patches or the vector representations that are of the P patches and that are obtained through processing.

It should be further understood that, in this embodiment, the target model may alternatively not include the third module. In this case, the features (that is, the foregoing third feature) that are of the plurality of nodes and that are obtained through $(N+M)^{th}$ transformation and that are obtained by the $M^{th}$ second module in the M second modules may be used as the output of the target model, that is, the (final) feature of the to-be-processed image.

806: Complete a visual task for the to-be-processed image based on the feature of the to-be-processed image.

For a description of step 806, refer to a related description part of step 603 in the embodiment shown in FIG. 6. Details are not described herein again.

In this embodiment of this application, after the to-be-processed image is obtained, the to-be-processed image may be input into the target model, to process the to-be-processed image by using the target model, so as to obtain the feature of the to-be-processed image. Then, the visual task for the to-be-processed image may be completed based on the feature of the to-be-processed image. The target model includes the first module, the second module located before the first module, and the second module located after the first module. The first module includes at least the graph neural network (that is, the first module is configured to implement at least feature aggregation), and the second module is configured to implement at least feature transformation. The target model may consider the to-be-processed image as the graph structure, that is, consider the plurality of pixels of the to-be-processed image as the plurality of nodes, and the second module located before the first module may first perform feature transformation on the features of the plurality of nodes in the graph structure, so that features (that is, the first feature) that are of the plurality of nodes and that are obtained through transformation are greatly different from each other in advance. Therefore, after the first module performs feature aggregation on the features that are of the plurality of nodes and that are obtained through transformation, obtained updated features (that is, the second feature) of the plurality of nodes are also different from each other, and the second module located after the first module may further perform feature transformation on the updated features of the plurality of nodes, so that features (that is, the third feature) that are of the plurality of nodes and that are obtained through re-transformation are more different from each other. The output of the target model may be obtained based on the features that are of the plurality of nodes and that are obtained through re-transformation (for example, the features that are of the plurality of nodes and that are obtained through re-transformation may be used as the output of the target model), that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

Further, in this embodiment of this application, a patch of the to-be-processed image may be used as a node in the graph structure, so that a quantity of nodes in the graph structure can be effectively reduced. For example, the to-be-processed image is divided into 100 patches, the graph structure corresponding to the to-be-processed image includes 100 nodes, and the graph neural network of the first module in the target model needs to process only 100 nodes. This can effectively reduce a calculation amount required for the graph neural network, and help the target model be used in some devices with limited computing power.

Furthermore, in this embodiment of this application, a node in the graph structure does not need to be manually selected, and all patches that form the entire to-be-processed image are used as nodes in the graph structure. This not only can avoid a human factor, but also can ensure that all original information of the to-be-processed image exists in the input of the target model, so that processing precision of the visual task for the to-be-processed image can be further improved.

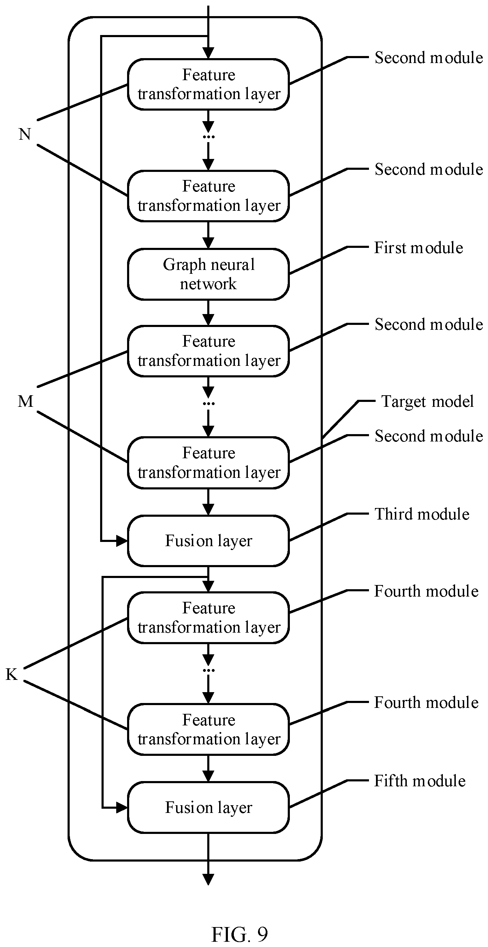

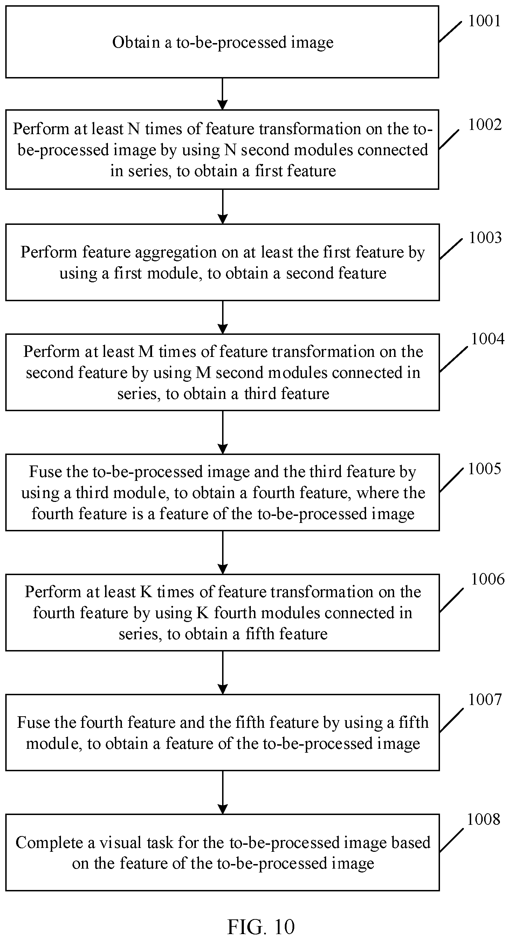

The second structure of the target model is described in detail above, and a third structure of the target model is described below. In this case, as shown in FIG. 9 (FIG. 9 is another schematic diagram of a structure of a target model according to an embodiment of this application), the target model includes one first module, N+M second modules (both N and M are positive integers greater than or equal to 1), one third module, K fourth modules (K is a positive integer greater than or equal to 1), and one fifth module, where the N second modules connected in series are disposed before the first module, and the M second modules connected in series are disposed after the first module. For the N second modules located before the first module, an input end of the 1st second module in the N second modules is used as the input end of the target model, and an output end of the Nth second module in the N second modules is connected to the input end of the first module. For the M second modules located after the first module, an input end of the 1st second module in the M second modules is connected to an output end of the first module, an output end of an Mth second module in the M second modules is connected to a first input end of the third module, a second input end of the third module may also be used as an input end of the target model, and an output end of the third module is connected to an input end of the first fourth module in the K fourth modules connected in series, an output end of a Kth fourth module in the K fourth modules is connected to a first input end of the fifth module, a second input end of the fifth module is connected to the output end of the third module, and an output end of the fifth module is used as an output end of the target model. The first module includes a graph neural network (that is, the first module is configured to implement feature aggregation), each second module includes a feature transformation layer (that is, each second module is configured to implement feature transformation), the third module includes a fusion layer, each fourth module includes a feature transformation layer (that is, each fourth module is configured to implement feature transformation), and the fifth module includes a fusion layer. The following describes a working procedure of a target model with the third structure. As shown in FIG. 10 (FIG. 10 is another schematic flowchart of a visual task processing method according to an embodiment of this application), the procedure includes the following steps.

1001: Obtain a to-be-processed image.

For a description of step 1001, refer to a related description part of step 801 in the embodiment shown in FIG. 8.

Details are not described herein again.

1002: Perform at least N times of feature transformation on the to-be-processed image by using the N second modules connected in series, to obtain a first feature.

1003: Perform feature aggregation on at least the first feature by using the first module, to obtain a second feature.

1004: Perform at least M times of feature transformation on the second feature by using the M second modules connected in series, to obtain a third feature.

1005: Fuse the to-be-processed image and the third feature by using the third module, to obtain a fourth feature.

For a description of step 1002 to step 1005, refer to a related description part of step 802 to step 805 in the embodiment shown in FIG. 8. Details are not described herein again.

It should be noted that, a difference between step 805 and step 1005 lies in that, the features (that is, the foregoing fourth feature) that are of the plurality of nodes and that are obtained through fusion and that are obtained by the third module in step 805 may be directly used as an output of the target model, that is, a (final) feature of the to-be-processed image, but the features that are of the plurality of nodes and that are obtained through fusion (that is, the foregoing fourth feature) and that are obtained by the third module in step 1005 are sent to the K fourth modules for subsequent processing.

1006: Perform at least K times of feature transformation on the fourth feature by using the K fourth modules connected in series, to obtain a fifth feature.

1007: Fuse the fourth feature and the fifth feature by using the fifth module, to obtain the feature of the to-be-processed image.

After receiving features that are of the plurality of nodes and that are obtained through fusion, the first fourth module of the K fourth modules may perform $(N+M+1)^{th}$ feature transformation on the features that are of the plurality of nodes and that are obtained through fusion, to obtain features that are of the plurality of nodes and that are obtained through $(N+M+1)^{th}$ transformation, ..., and after receiving features that are of the plurality of nodes and that are obtained through $(N+M+K-1)^{th}$ transformation, the $K^{th}$ fourth module of the K fourth modules may perform $(N+M+K)^{th}$ feature transformation on the features that are of the plurality of nodes and that are obtained through $(N+M+K-1)^{th}$ transformation, to obtain features that are of the plurality of nodes and that are obtained through $(N+M+K)^{th}$ transformation (that is, the foregoing fifth feature). Then, after receiving the features of the plurality of nodes and the features that are of the plurality of nodes and that are obtained through $(N+K)^{th}$ transformation, the fifth module may fuse the features that are of the plurality of nodes and that are obtained through fusion and the features that are of the plurality of nodes and that are obtained through $(N+M+K)^{th}$ transformation, to obtain features that are of the plurality of nodes and that are obtained through second fusion. In this case, the features that are of the plurality of nodes and that are obtained through second fusion may be used as the output of the target model, that is, the (final) feature of the to-be-processed image.

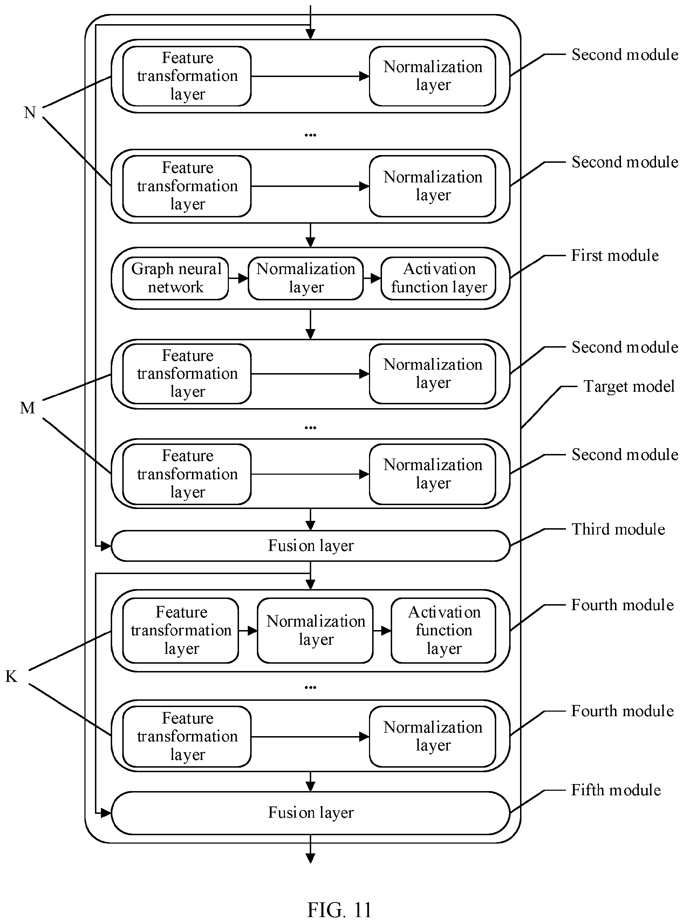

It should be understood that, in this embodiment, only an example in which the first module includes the graph neural network is used for description, and a structure of the first module is not limited. In actual application, as shown in FIG. 11 (FIG. 11 is another schematic diagram of a structure of a target model according to an embodiment of this application), the first module may include a graph neural network, a normalization layer, and an activation function layer that are connected in series. In this case, the first module may sequentially perform feature aggregation, feature update (implemented by the graph neural network), normalization (implemented by the normalization layer), and non-linear processing (implemented by the activation function layer) on features that are of the plurality of nodes and that are obtained through $N^{th}$ transformation, to obtain updated features of the plurality of nodes (that is, the second feature).

It should be further understood that, in this embodiment, only an example in which each second module includes a feature transformation layer is used for description, and a structure of the second module is not limited. In actual application, as shown in FIG. 11, each second module may include a feature transformation layer and a normalization layer that are connected in series. The feature transformation layer may be a fully-connected layer, a convolutional layer, or a Fourier transformation layer. In this case, the $1^{st}$ second module of the N second modules may sequentially perform first feature transformation (implemented by the feature transformation layer) and first normalization (implemented by the normalization layer) on the features of the plurality of nodes, to obtain features that are of the plurality of nodes and that are obtained through first transformation, the $2^{nd}$ second module of the N second modules may sequentially perform second feature transformation and second normalization on the features that are of the plurality of nodes and that are obtained through first transformation, to obtain features that are of the plurality of nodes and that are obtained through second transformation, ..., and the $N^{th}$ second module of the N second modules may sequentially perform $N^{th}$ feature transformation and $N^{th}$ normalization on features that are of the plurality of nodes and that are obtained through $(N-1)^{th}$ transformation, to obtain features that are of the plurality of nodes and that are obtained through $N^{th}$ transformation (that is, the foregoing first feature). Similarly, the $1^{st}$ second module of the M second modules may sequentially perform $(N+1)^{th}$ transformation and $(N+1)^{th}$ normalization on updated features of the plurality of nodes, to obtain features that are of the plurality of nodes and that are obtained through $(N+1)^{th}$ transformation, ..., and the $M^{th}$ second module of the M second modules may sequentially perform $(N+M)^{th}$ transformation and $(N+M)^{th}$ normalization on features that are of the plurality of nodes and that are obtained through $(N+M-1)^{th}$ transformation, to obtain features that are of the plurality of nodes and that are obtained through (N+M)th transformation (that is, the third feature).

It should be further understood that, in this embodiment, only an example in which each fourth module includes a feature transformation layer is used for description, and a structure of the fourth module is not limited. In actual application, as shown in FIG. 11, for any fourth module, the fourth module may include a feature transformation layer and a normalization layer that are connected in series, or may include a feature transformation layer, a normalization layer, and an activation function layer that are connected in series. The feature transformation layer is a fully-connected layer, a convolutional layer, or a Fourier transformation layer. In this case, the first fourth module of the K fourth modules may sequentially perform (N+M+1)th feature transformation, (N+M+2)th normalization, and second non-linear processing on the features that are of the plurality of nodes and that are obtained through fusion, to obtain features that are of the plurality of nodes and that are obtained through (N+M+1)th transformation, ..., and the Kth fourth module of the K fourth modules may sequentially perform (N+M+K)th feature transformation and (N+M+K+1)th normalization on features that are of the plurality of nodes and that are obtained through(N+M+K-1)th transformation, to obtain features that are of the plurality of nodes and that are obtained through (N+M+K)th transformation (that is, the fifth feature).

1008: Complete the visual task for the to-be-processed image based on the feature of the to-be-processed image.

For a description of step 1008, refer to a related description part of step 806 in the embodiment shown in FIG. 8. Details are not described herein again.

In addition, the target model provided in this embodiment of this application may be further compared with a neural network model provided in a conventional technology in a test scenario. A visual task that needs to be resolved in the test scenario is image classification. A comparison result is shown in Table 1.

**Table 1**

| Model | Image size | Quantity of parameters (M) | Calculation amount (B) | Metric 1 | Metric 2 |
|---|---|---|---|---|---|
| Conventional technology 1 | 224×224 | 12 | 1.8 | 70.6 | - |
| Conventional technology 1 | 224×224 | 5.7 | 1.3 | 72.2 | - |
| Conventional technology 1 | 224×224 | 25.6 | 4.1 | 79.8 | - |
| Conventional technology 1 | 224×224 | 21.1 | 20.9 | 80.2 | - |
| Conventional | 224×224 | 51.6 | 51.4 | 81.4 | - |
| technology 1 | | | | | |
| Conventional technology 1 | 224×224 | 30 | 6.0 | 79.4 | - |
| Conventional technology 1 | 224×224 | 59 | 11.7 | 76.4 | - |
| Conventional technology 1 | 224×224 | 22.1 | 4.6 | 79.8 | - |
| This embodiment of this application | 224×224 | 22.7 | 4.5 | 80.4 | 95.2 |

It can be learned from Table 1 that, the target model provided in this embodiment of this application has higher precision when the quantity of parameters and the calculation amount are of the same order of magnitude as those in the conventional technology 1.

In this embodiment of this application, after the to-be-processed image is obtained, the to-be-processed image may be input into the target model, to process the to-be-processed image by using the target model, so as to obtain the feature of the to-be-processed image. Then, the visual task for the to-be-processed image may be completed based on the feature of the to-be-processed image. The target model includes the first module, the second module located before the first module, and the second module located after the first module. The first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as the plurality of nodes, and the second module located before the first module may first perform feature transformation on the features of the plurality of nodes in the graph structure, so that features (that is, the first feature) that are of the plurality of nodes and that are obtained through transformation are greatly different from each other in advance. Therefore, after the first module performs feature aggregation on the features that are of the plurality of nodes and that are obtained through transformation, obtained updated features (that is, the second feature) of the plurality of nodes are also different from each other, and the second module located after the first module may further perform feature transformation on the updated features of the plurality of nodes, so that features (that is, the third feature) that are of the plurality of nodes and that are obtained through re-transformation are more different from each other. The output of the target model may be obtained based on the features that are of the plurality of nodes and that are obtained through re-transformation, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

Further, in this embodiment of this application, a patch of the to-be-processed image may be used as a node in the graph structure, so that a quantity of nodes in the graph structure can be effectively reduced. For example, the to-be-processed image is divided into 100 patches, the graph structure corresponding to the to-be-processed image includes 100 nodes, and the graph neural network of the first module in the target model needs to process only 100 nodes. This can effectively reduce a calculation amount required for the graph neural network, and help the target model be used in some devices with limited computing power.

Furthermore, in this embodiment of this application, a node in the graph structure does not need to be manually selected, and all patches that form the entire to-be-processed image are used as nodes in the graph structure. This not only can avoid a human factor, but also can ensure that all original information of the to-be-processed image exists in the input of the target model, so that processing precision of the visual task for the to-be-processed image can be further improved.

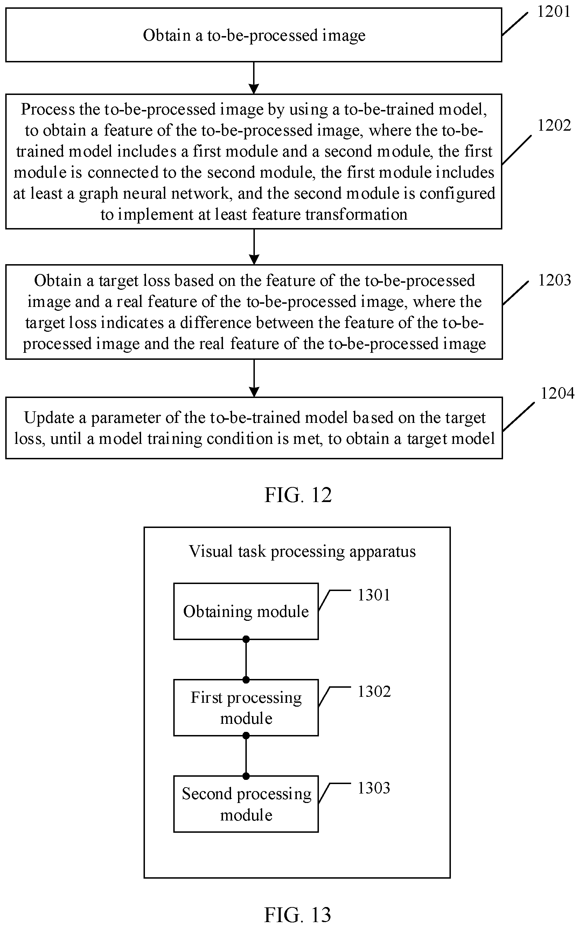

The foregoing describes in detail the target model and the visual task processing method provided in embodiments of this application. The following describes the model training method provided in embodiments of this application. FIG. 12 is a schematic flowchart of a model training method according to an embodiment of this application. The method includes the following steps.

1201: Obtain a to-be-processed image.

In this embodiment, when a to-be-trained model (a neural network model that needs to be trained) needs to be trained, a batch of training data may be first obtained, and the batch of training data includes the to-be-processed image. It should be noted that a real feature of the to-be-processed image is known.

1202: Process the to-be-processed image by using the to-be-trained model, to obtain a feature of the to-be-processed image, where the to-be-trained model includes a first module and a second module, the first module is connected to the second module, the first module includes at least a graph neural network, and the second module is configured to implement at least feature transformation.

After the to-be-processed image is obtained, the to-be-processed image may be input into the to-be-trained model, to process the to-be-processed image by using the to-be-trained model, so as to obtain the feature of the to-be-processed image, that is, a final feature of the to-be-processed image (which may also be referred to as a predicted feature of the to-be-processed image). The to-be-trained model includes the first module and the second module, the first module is connected to the second module, the first module includes at least a graph neural network (that is, the first module is configured to implement at least feature aggregation), and the second module is configured to implement at least feature transformation.

In a possible implementation, a quantity of second modules is N+M, N≥1, and M≥1, and the processing the to-be-processed image by using a to-be-trained model, to obtain a feature of the to-be-processed image includes: performing at least N times of feature transformation on the to-be-processed image by using N second modules connected in series, to obtain a first feature; performing feature aggregation on at least the first feature by using the first module, to obtain a second feature; performing at least M times of feature transformation on the second feature by using M second modules connected in series, to obtain a third feature; and obtaining the feature of the to-be-processed image based on the third feature.

In a possible implementation, the to-be-trained model further includes a third module, and the obtaining the feature of the to-be-processed image based on the third feature includes: fusing the to-be-processed image and the third feature by using the third module, to obtain a fourth feature; and obtaining the feature of the to-be-processed image based on the fourth feature.

In a possible implementation, the to-be-trained model further includes K fourth modules that are connected in series and a fifth module, K≥1, and the obtaining the feature of the to-be-processed image based on the fourth feature further includes: performing at least K times of feature transformation on the fourth feature by using the K fourth modules, to obtain a fifth feature; and fusing the fourth feature and the fifth feature by using the fifth module, to obtain the feature of the to-be-processed image.

In a possible implementation, the first module includes the graph neural network, a normalization layer, and an activation function layer, and the graph neural network of the first module, the normalization layer of the first module, and the activation function layer of the first module are connected in series.

In a possible implementation, the second module includes a feature transformation layer and a normalization layer, the feature transformation layer of the second module and the normalization layer of the second module are connected in series, and the feature transformation layer of the second module is a fully-connected layer, a convolutional layer, or a Fourier transformation layer.

In a possible implementation, the fourth module includes a feature transformation layer and a normalization layer, and the feature transformation layer of the fourth module and the normalization layer of the fourth module are connected in series; or, the fourth module includes a feature transformation layer, a normalization layer, and an activation function layer, and the feature transformation layer of the fourth module, the normalization layer of the fourth module, and the activation function layer of the fourth module are connected in series, where the feature transformation layer of the fourth module is a fully-connected layer, a convolutional layer, or a Fourier transformation layer.

In a possible implementation, before the processing the to-be-processed image by using a to-be-trained model, to obtain a feature of the to-be-processed image, the method further includes: dividing the to-be-processed image, to obtain P patches, where P>1; mapping the P patches, to obtain vector representations of the P patches; and constructing an initial feature of the to-be-processed image based on the vector representations of the P patches; and the processing the to-be-processed image by using a to-be-trained model, to obtain a feature of the to-be-processed image includes: processing the initial feature of the to-be-processed image by using the to-be-trained model, to obtain the feature of the to-be-processed image.

In a possible implementation, before the constructing an initial feature of the to-be-processed image based on the vector representations of the P patches, the method further includes: adding positional encoding of an $i^{th}$ patch and a vector representation of the $i^{th}$ patch, to obtain a vector representation that is of the $i^{th}$ patch and that is obtained through processing, where the positional encoding of the $i^{th}$ patch indicates a position of the $i^{th}$ patch in the to-be-processed image, and i=1, ..., P; and the constructing an initial feature of the to-be-processed image based on the vector representations of the P patches includes: constructing the initial feature of the to-be-processed image based on vector representations that are of the P patches and that are obtained through processing.

1203: Obtain a target loss based on the feature of the to-be-processed image and the real feature of the to-be-processed image, where the target loss indicates a difference between the feature of the to-be-processed image and the real feature of the to-be-processed image.

After the final feature of the to-be-processed image is obtained, calculation may be performed on the final feature of the to-be-processed image and the real feature of the to-be-processed image by using a preset target loss function, to obtain the target loss. The target loss indicates the difference between the final feature of the to-be-processed image and the real feature of the to-be-processed image.

1204: Update parameters of the to-be-trained model based on the target loss, until a model training condition is met, to obtain a target model.

After the target loss is obtained, the parameters of the to-be-trained model may be updated based on the target loss, and a next batch of training data is used to continue to train the to-be-trained model whose parameters are updated, until the model training condition is met (for example, the target loss reaches convergence), to obtain the target model shown in FIG. 4, FIG. 5, FIG. 7, FIG. 9, or FIG. 11.

The target model obtained through training in this embodiment of this application has a function of obtaining a feature of an image. When the visual task for the to-be-processed image needs to be processed, the to-be-processed image may be first obtained, and the to-be-processed image is input into the target model, to process the to-be-processed image by using the target model, so as to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

The foregoing describes in detail the model training method provided in embodiments of this application. The following describes a visual task processing apparatus and a model training apparatus provided in embodiments of this application. FIG. 13 is a schematic diagram of a structure of a visual task processing apparatus according to an embodiment of this application. As shown in FIG. 13, the apparatus includes:

an obtaining module 1301, configured to obtain a to-be-processed image;
a first processing module 1302, configured to process the to-be-processed image by using a target model, to obtain a feature of the to-be-processed image, where the target model includes a first module and a second module, the first module is connected to the second module, the first module includes at least a graph neural network, and the second module is configured to implement at least feature transformation; and
a second processing module 1303, configured to complete a visual task for the to-be-processed image based on the feature of the to-be-processed image.

In this embodiment of this application, after the to-be-processed image is obtained, the to-be-processed image may be input into the target model, to process the to-be-processed image by using the target model, so as to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

In a possible implementation, a quantity of second modules is N+M, N≥1, and M≥1, and the first processing module 1302 is configured to: perform at least N times of feature transformation on the to-be-processed image by using N second modules connected in series, to obtain a first feature; perform feature aggregation on at least the first feature by using the first module, to obtain a second feature; perform at least M times of feature transformation on the second feature by using M second modules connected in series, to obtain a third feature; and obtain the feature of the to-be-processed image based on the third feature.

In a possible implementation, the target model further includes a third module, and the first processing module 1302 is configured to: fuse the to-be-processed image and the third feature by using the third module, to obtain a fourth feature; and obtain the feature of the to-be-processed image based on the fourth feature.

In a possible implementation, the target model further includes K fourth modules that are connected in series and a fifth module, K≥1, and the first processing module 1302 is configured to: perform at least K times of feature transformation on the fourth feature by using the K fourth modules, to obtain a fifth feature; and fuse the fourth feature and the fifth feature by using the fifth module, to obtain the feature of the to-be-processed image.

In a possible implementation, the first module further includes the graph neural network, a normalization layer, and an activation function layer, and the graph neural network of the first module, the normalization layer of the first module, and the activation function layer of the first module are connected in series.

In a possible implementation, the second module includes a feature transformation layer and a normalization layer, the feature transformation layer of the second module and the normalization layer of the second module are connected in series, and the feature transformation layer of the second module is a fully-connected layer, a convolutional layer, or a Fourier transformation layer.

In a possible implementation, the fourth module includes a feature transformation layer and a normalization layer, and the feature transformation layer of the fourth module and the normalization layer of the fourth module are connected in series; or, the fourth module includes a feature transformation layer, a normalization layer, and an activation function layer, and the feature transformation layer of the fourth module, the normalization layer of the fourth module, and the activation function layer of the fourth module are connected in series, where the feature transformation layer of the fourth module is a fully-connected layer, a convolutional layer, or a Fourier transformation layer.

In a possible implementation, the apparatus further includes: a preprocessing module, configured to: divide the to-be-processed image, to obtain P patches, where P>1; map the P patches, to obtain vector representations of the P patches; and construct an initial feature of the to-be-processed image based on the vector representations of the P patches; and the first processing module 1301 is configured to: process the initial feature of the to-be-processed image by using the target model, to obtain the feature of the to-be-processed image.

In a possible implementation, the preprocessing module is further configured to: add positional encoding of an $i^{th}$ patch and a vector representation of the $i^{th}$ patch, to obtain a vector representation that is of the $i^{th}$ patch and that is obtained through processing, where the positional encoding of the $i^{th}$ patch indicates a position of the $i^{th}$ patch in the to-be-processed image, and i=1, ..., P; and the preprocessing module is configured to construct the initial feature of the to-be-processed image based on vector representations that are of the P patches and that are obtained through processing.

In a possible implementation, the visual task includes at least one of the following: image classification, target detection, semantic segmentation, image denoising, and image super-resolution.

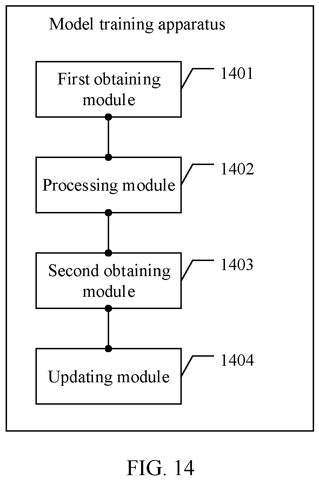

FIG. 14 is a schematic diagram of a structure of a model training apparatus according to an embodiment of this application. As shown in FIG. 14, the apparatus includes:

a first obtaining module 1401, configured to obtain a to-be-processed image;

a processing module 1402, configured to process the to-be-processed image by using a to-be-trained model, to obtain a feature of the to-be-processed image, where the to-be-trained model includes a first module and a second module, the first module is connected to the second module, the first module includes at least a graph neural network, and the second module is configured to implement at least feature transformation;

a second obtaining module 1403, configured to obtain a target loss based on the feature of the to-be-processed image and a real feature of the to-be-processed image, where the target loss indicates a difference between the feature of the to-be-processed image and the real feature of the to-be-processed image; and

an updating module 1404, configured to update parameters of the to-be-trained model based on the target loss, until a model training condition is met, to obtain a target model.

The target model obtained through training in this embodiment of this application has a function of obtaining a feature of an image. When a visual task for the to-be-processed image needs to be processed, the to-be-processed image may be first obtained, and the to-be-processed image is input into the target model, to process the to-be-processed image by using the target model, so as to obtain the feature of the to-be-processed image. Then, the visual task for the to-be-processed image may be completed based on the feature of the to-be-processed image. The target model includes the first module and the second module, the first module is connected to the second module, the first module includes at least the graph neural network (that is, the first module is configured to implement at least feature aggregation), and the second module is configured to implement at least feature transformation. The target model may consider the to-be-processed image as a graph structure, that is, consider a plurality of pixels of the to-be-processed image as a plurality of nodes. Therefore, if the first module is located before the second module, the first module first performs feature aggregation on features of the plurality of nodes in the graph structure, to obtain updated features of the plurality of nodes. Then, the second module performs feature transformation on the updated features of the plurality of nodes, so that features that are of the plurality of nodes and that are obtained through transformation are different from each other, and the features that are of the plurality of nodes and that are obtained through transformation may be used as an output of the target model, that is, the feature of the to-be-processed image. If the second module is located before the first module, the second module first performs feature transformation on features of the plurality of nodes in the graph structure, so that features that are of the plurality of nodes and that are obtained through transformation are greatly different from each other in advance. Therefore, after the first module performs feature aggregation on the features that are of the plurality of nodes and that are obtained through transformation, obtained updated features of the plurality of nodes may also be different from each other, and the updated features of the plurality of nodes may be used as an output of the target model, that is, the feature of the to-be-processed image. It can be learned from the foregoing that, features that are of the plurality of nodes and that are finally output by the target model are sufficiently different from each other, and a specific diversity can be maintained, to help improve processing precision of the visual task.

In a possible implementation, a quantity of second modules is N+M, N≥1, and M≥1, and the processing module 1402 is configured to: perform at least N times of feature transformation on the to-be-processed image by using N second modules connected in series, to obtain a first feature; perform feature aggregation on at least the first feature by using the first module, to obtain a second feature; perform at least M times of feature transformation on the second feature by using M second modules connected in series, to obtain a third feature; and obtain the feature of the to-be-processed image based on the third feature.

In a possible implementation, the to-be-trained model further includes a third module, and the processing module 1402 is configured to: fuse the to-be-processed image and the third feature by using the third module, to obtain a fourth feature; and obtain the feature of the to-be-processed image based on the fourth feature.

In a possible implementation, the to-be-trained model further includes K fourth modules that are connected in series and a fifth module, K≥1, and the processing module 1402 is configured to: perform at least K times of feature transformation on the fourth feature by using the K fourth modules, to obtain a fifth feature; and fuse the fourth feature and the fifth feature by using the fifth module, to obtain the feature of the to-be-processed image.

In a possible implementation, the first module includes the graph neural network, a normalization layer, and an activation function layer, and the graph neural network of the first module, the normalization layer of the first module, and the activation function layer of the first module are connected in series.

In a possible implementation, the second module includes a feature transformation layer and a normalization layer, the feature transformation layer of the second module and the normalization layer of the second module are connected in series, and the feature transformation layer of the second module is a fully-connected layer, a convolutional layer, or a Fourier transformation layer.

In a possible implementation, the fourth module includes a feature transformation layer and a normalization layer, and the feature transformation layer of the fourth module and the normalization layer of the fourth module are connected in series; or, the fourth module includes a feature transformation layer, a normalization layer, and an activation function layer, and the feature transformation layer of the fourth module, the normalization layer of the fourth module, and the activation function layer of the fourth module are connected in series, where the feature transformation layer of the fourth module is a fully-connected layer, a convolutional layer, or a Fourier transformation layer.

In a possible implementation, the apparatus further includes: a preprocessing module, configured to: divide the to-be-processed image, to obtain P patches, where P>1; map the P patches, to obtain vector representations of the P patches; and construct an initial feature of the to-be-processed image based on the vector representations of the P patches; and the processing module 1402 is configured to process the initial feature of the to-be-processed image by using the to-be-trained model, to obtain the feature of the to-be-processed image.

In a possible implementation, the preprocessing module is further configured to add positional encoding of an $i^{th}$ patch and a vector representation of the $i^{th}$ patch, to obtain a vector representation that is of the $i^{th}$ patch and that is obtained through processing, where the positional encoding of the $i^{th}$ patch indicates a position of the $i^{th}$ patch in the to-be-processed image, and i=1, ..., P; and the preprocessing module is configured to construct the initial feature of the to-be-processed image based on vector representations that are of the P patches and that are obtained through processing.

It should be noted that, content such as information exchange between the modules/units of the apparatuses and an execution process is based on the same concept as the method embodiments of this application, and produces the same technical effects as those of the method embodiments of this application. For specific content, refer to the foregoing descriptions in the method embodiments of this application. Details are not described herein again.

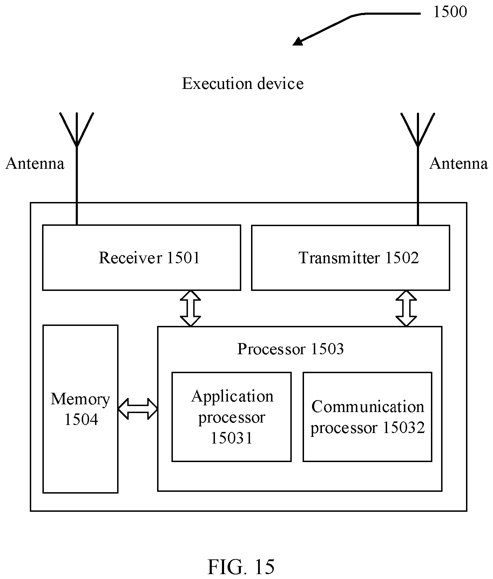

An embodiment of this application further relates to an execution device. FIG. 15 is a schematic diagram of a structure of an execution device according to an embodiment of this application. As shown in FIG. 15, the execution device 1500 may be specifically represented as a mobile phone, a tablet computer, a notebook computer, an intelligent wearable device, a server, or the like. This is not limited herein. The visual task processing apparatus described in the embodiment corresponding to FIG. 13 may be deployed on the execution device 1500, and is used to implement visual task processing functions in the embodiments corresponding to FIG. 6, FIG. 8, and FIG. 10. Specifically, the execution device 1500 includes: a receiver 1501, a transmitter 1502, a processor 1503, and a memory 1504 (there may be one or more processors 1503 in the execution device 1500, and one processor is used as an example in FIG. 15), where the processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provides instructions and data to the processor 1503. A part of the memory 1504 may further include a non-volatile random access memory (non-volatile random access memory, NVRAM). The memory 1504 stores a processor and operation instructions, an executable module or a data structure, a subnet thereof, or an extended set thereof. The operation instructions may include various operation instructions to implement various operations.

The processor 1503 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiment of this application may be applied to the processor 1503, or implemented by the processor 1503. The processor 1503 may be an integrated circuit chip and has a signal processing capability. In an implementation process, the steps in the foregoing methods may be completed by using an integrated logic circuit of hardware in the processor 1503 or instructions in a form of software. The processor 1503 may be a general-purpose processor, a digital signal processor (digital signal processor, DSP), a microprocessor, or a microcontroller. The processor 1503 may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 1503 may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing method in combination with hardware of the processor 1503.

The receiver 1501 may be configured to: receive input digital or character information, and generate a signal input related to related settings and function control of the execution device. The transmitter 1502 may be configured to output digital or character information through a first interface. The transmitter 1502 may be further configured to send instructions to a disk group through the first interface, to modify data in the disk group. The transmitter 1502 may further include a display device such as a display.

In this embodiment of this application, in one case, the processor 1503 is configured to process a visual task for a to-be-processed image by using the target model in the embodiment corresponding to FIG. 6, FIG. 8, or FIG. 10.

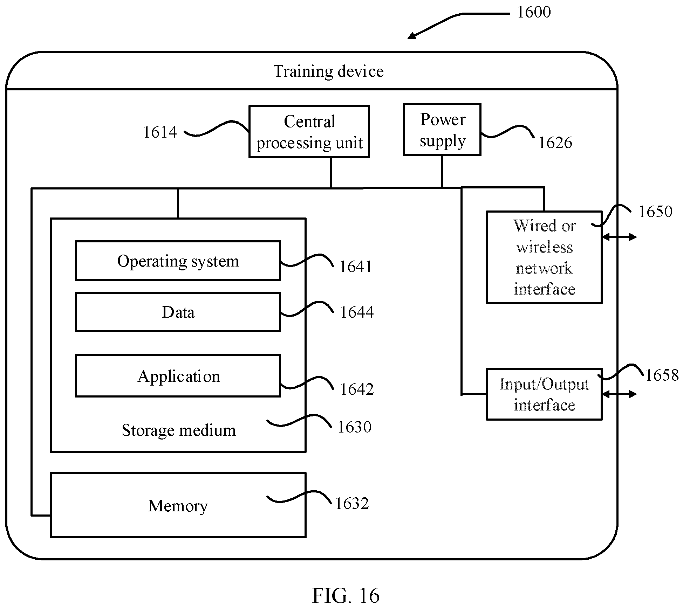

An embodiment of this application further relates to a training device. FIG. 16 is a schematic diagram of a structure of a training device according to an embodiment of this application. As shown in FIG. 16, the training device 1600 is implemented by one or more servers. The training device 1600 may greatly differ due to different configurations or performance, and may include one or more central processing units (central processing units, CPU) 1614 (for example, one or more processors), a memory 1632, one or more storage media 1630 (for example, one or more mass storage devices) that store an application 1642 or data 1644. The memory 1632 and the storage medium 1630 may be temporary storage or persistent storage. A program stored in the storage medium 1630 may include one or more modules (not shown in the figure), and each module may include a series of instruction operations performed on the training device. Further, the central processing unit 1614 may be configured to: communicate with the storage medium 1630, and perform the series of instruction operations in the storage medium 1630 on the training device 1600.

The training device 1600 may further include one or more power supplies 1626, one or more wired or wireless network interfaces 1650, one or more input/output interfaces 1658, and/or one or more operating systems 1641, for example, Windows ServerTM, Mac OS XTM, UnixTM, LinuxTM, and FreeBSDTM.

Specifically, the training device may perform the model training method in the embodiment corresponding to FIG. 12.

An embodiment of this application further relates to a computer-readable storage medium. The computer-readable storage medium stores a program used for signal processing. When the program runs on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. The storage unit may alternatively be a storage unit that is located outside the chip and that is in a wireless access device, for example, a read-only memory (read-only memory, ROM) or another type of static storage device that can store static information and instructions, or a random access memory (random access memory, RAM).

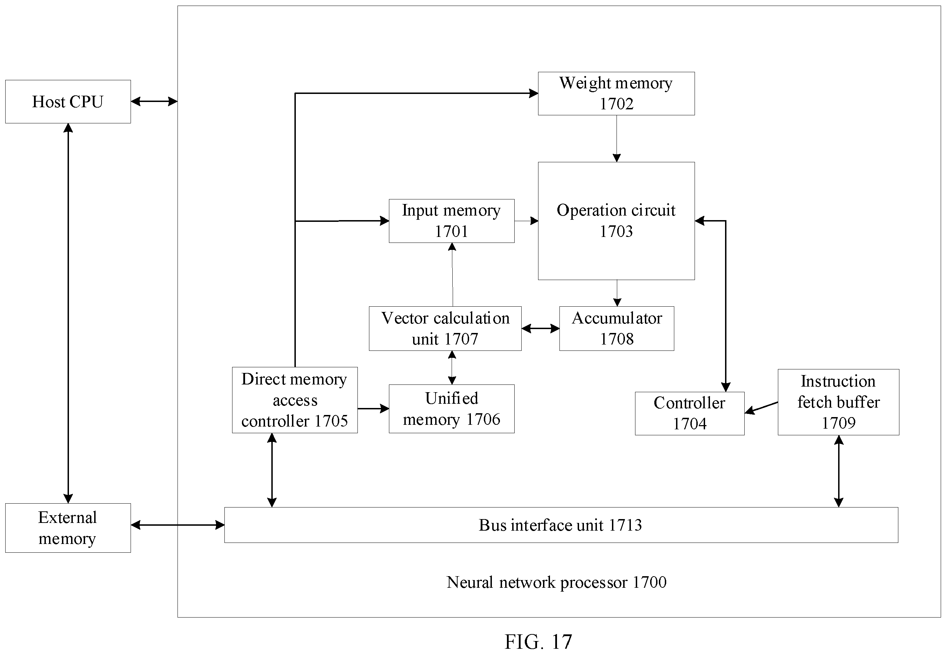

Specifically, refer to FIG. 17. FIG. 17 is a schematic diagram of a structure of a chip according to an embodiment of this application. The chip may be represented as a neural-network process unit NPU 1700. The NPU 1700 is mounted to a host CPU (Host CPU) as a coprocessor, and the host CPU assigns a task. A core part of the NPU is an operation circuit 1703. A controller 1704 controls the operation circuit 1703 to extract matrix data in a memory and performs a multiplication operation.

In some implementations, the operation circuit 1703 includes a plurality of processing units (Process Engine, PE) inside. In some implementations, the operation circuit 1703 is a two-dimensional systolic array. The operation circuit 1703 may alternatively be a one-dimensional systolic array or another electronic circuit that can perform mathematical operation such as multiplication and addition. In some implementations, the operation circuit 1703 is a general-purpose matrix processor.

For example, it is assumed that there is an input matrix A, a weight matrix B, and an output matrix C. The operation circuit obtains data corresponding to the matrix B from a weight memory 1702, and buffers the data on each PE in the operation circuit. The operation circuit obtains data of the matrix A from an input memory 1701 and performs matrix operation with the matrix B, and stores a partial result or a final result of an obtained matrix into an accumulator (accumulator) 1708.

A unified memory 1706 is configured to store input data and output data. Weight data is directly transferred to the weight memory 1702 by using a storage unit access controller (Direct Memory Access Controller, DMAC) 1705. The input data is also transferred to the unified memory 1706 by using the DMAC.

A BIU is a bus interface unit, namely, a bus interface unit 1713, and is configured to perform interaction between an AXI bus and the DMAC and between the AXI bus and an instruction fetch buffer (Instruction Fetch Buffer, IFB) 1709.

The bus interface unit 1713 (Bus Interface Unit, BIU for short) is used by the instruction fetch buffer 1709 to obtain an instruction from an external memory, and is further used by the storage unit access controller 1705 to obtain raw data of the input matrix A or the weight matrix B from the external memory.

The DMAC is mainly configured to transfer input data in the external memory DDR to the unified memory 1706, transfer weight data to the weight memory 1702, or transfer input data to the input memory 1701.

A vector calculation unit 1707 includes a plurality of operation processing units, and when necessary, performs further processing on an output of the operation circuit 1703, for example, vector multiplication, vector addition, exponential operation, logarithm operation, and size comparison. The vector calculation unit 1707 is mainly used for non-convolutional/ fully-connected layer network calculation in a neural network, such as batch normalization (batch normalization), pixel-level summation, and upsampling of a predicted label plane.

In some implementations, the vector calculation unit 1707 can store processed output vectors into the unified memory 1706. For example, the vector calculation unit 1707 may apply a linear function or a non-linear function to the output of the operation circuit 1703. For example, linear interpolation is performed on a predicted label plane extracted by a convolutional layer. For another example, vectors whose values are accumulated are used to generate an activation value. In some implementations, the vector calculation unit 1707 generates a normalized value, a pixel-level sum value, or both. In some implementations, the processed output vectors can be used as an activation input to the operation circuit 1703, for example, for use in subsequent layers in the neural network.

The instruction fetch buffer (instruction fetch buffer) 1709 connected to the controller 1704 is configured to store instructions used by the controller 1704.

The unified memory 1706, the input memory 1701, the weight memory 1702, and the instruction fetch buffer 1709 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all of the modules may be selected based on actual requirements, to achieve the objective of the solution of this embodiment. In addition, in the accompanying drawings of the apparatus embodiments provided in this application, a connection relationship between modules indicates that there is communication connection between the modules, and the communication connection may be specifically implemented as one or more communication buses or signal cables.

Based on the descriptions of the foregoing implementations, a person skilled in the art can clearly understand that this application may be implemented by software in addition to necessary commodity hardware, and certainly may alternatively be implemented by dedicated hardware, including an application-specific integrated circuit, a dedicated CPU, a dedicated memory, a dedicated component, and the like. Generally, any function that can be completed by a computer program can be easily implemented by using corresponding hardware. Moreover, a specific hardware structure used to implement a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technology may be embodied in a form of a software product. The computer software product is stored in a readable storage medium, such as a floppy disk, a USB flash drive, a removable hard disk, a ROM, a RAM, a magnetic disk, or an optical disc of a computer, and includes several instructions for enabling a computer device (which may be a personal computer, a training device, or a network device) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, procedures or functions according to embodiments of this application are entirely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A visual task processing method, wherein the method comprises:

   obtaining a to-be-processed image;
   processing the to-be-processed image by using a target model, to obtain a feature of the to-be-processed image, wherein the target model comprises a first module and a second module, the first module is connected to the second module, the first module comprises at least a graph neural network, and the second module is configured to implement at least feature transformation; and
   completing a visual task for the to-be-processed image based on the feature of the to-be-processed image.

2. The method according to claim 1, wherein a quantity of second modules is N+M, N≥1, and M≥1, and the processing the to-be-processed image by using a target model, to obtain a feature of the to-be-processed image comprises:

   performing at least N times of feature transformation on the to-be-processed image by using N second modules connected in series, to obtain a first feature;
   performing feature aggregation on at least the first feature by using the first module, to obtain a second feature;
   performing at least M times of feature transformation on the second feature by using M second modules connected in series, to obtain a third feature; and
   obtaining the feature of the to-be-processed image based on the third feature.

3. The method according to claim 2, wherein the target model further comprises a third module, and the obtaining the feature of the to-be-processed image based on the third feature comprises:

   fusing the to-be-processed image and the third feature by using the third module, to obtain a fourth feature; and
   obtaining the feature of the to-be-processed image based on the fourth feature.

4. The method according to claim 3, wherein the target model further comprises K fourth modules that are connected in series and a fifth module, K≥1, and the obtaining the feature of the to-be-processed image based on the fourth feature comprises:

   performing at least K times of feature transformation on the fourth feature by using the K fourth modules, to obtain a fifth feature; and
   fusing the fourth feature and the fifth feature by using the fifth module, to obtain the feature of the to-be-processed image.

5. The method according to any one of claims 1 to 4, wherein the first module further comprises the graph neural network, a normalization layer, and an activation function layer, and the graph neural network of the first module, the normalization layer of the first module, and the activation function layer of the first module are connected in series.

6. The method according to any one of claims 1 to 5, wherein the second module comprises a feature transformation layer and a normalization layer, the feature transformation layer of the second module and the normalization layer of the second module are connected in series, and the feature transformation layer of the second module is a fully-connected layer, a convolutional layer, or a Fourier transformation layer.

7. The method according to claim 4, wherein the fourth module comprises a feature transformation layer and a normalization layer, and the feature transformation layer of the fourth module and the normalization layer of the fourth module are connected in series; or,

the fourth module comprises a feature transformation layer, a normalization layer, and an activation function layer, and the feature transformation layer of the fourth module, the normalization layer of the fourth module, and the activation function layer of the fourth module are connected in series, wherein
the feature transformation layer of the fourth module is a fully-connected layer, a convolutional layer, or a Fourier transformation layer.

8. The method according to any one of claims 1 to 7, wherein before the processing the to-be-processed image by using a target model, to obtain a feature of the to-be-processed image, the method further comprises:

dividing the to-be-processed image, to obtain P patches, wherein P>1;
mapping the P patches, to obtain vector representations of the P patches;
constructing an initial feature of the to-be-processed image based on the vector representations of the P patches; and
the processing the to-be-processed image by using a target model, to obtain a feature of the to-be-processed image comprises:
processing the initial feature of the to-be-processed image by using the target model, to obtain the feature of the to-be-processed image.

9. The method according to claim 8, wherein before the constructing an initial feature of the to-be-processed image based on the vector representations of the P patches, the method further comprises:

adding positional encoding of an $i^{th}$ patch and a vector representation of the $i^{th}$ patch, to obtain a vector representation that is of the $i^{th}$ patch and that is obtained through processing, wherein the positional encoding of the $i^{th}$ patch indicates a position of the $i^{th}$ patch in the to-be-processed image, and i=1, ..., P; and
the constructing an initial feature of the to-be-processed image based on the vector representations of the P patches comprises:
constructing the initial feature of the to-be-processed image based on vector representations that are of the P patches and that are obtained through processing.

10. The method according to any one of claims 1 to 9, wherein the visual task comprises at least one of the following: image classification, target detection, semantic segmentation, image denoising, and image super-resolution.

11. A model training method, wherein the method comprises:

obtaining a to-be-processed image;
processing the to-be-processed image by using a to-be-trained model, to obtain a feature of the to-be-processed image, wherein the to-be-trained model comprises a first module and a second module, the first module is connected to the second module, the first module comprises at least a graph neural network, and the second module is configured to implement at least feature transformation;
obtaining a target loss based on the feature of the to-be-processed image and a real feature of the to-be-processed image, wherein the target loss indicates a difference between the feature of the to-be-processed image and the real feature of the to-be-processed image; and
updating parameters of the to-be-trained model based on the target loss, until a model training condition is met, to obtain a target model.

12. The method according to claim 11, wherein a quantity of second modules is N+M, N≥1, and M≥1, and the processing the to-be-processed image by using a to-be-trained model, to obtain a feature of the to-be-processed image comprises:

performing at least N times of feature transformation on the to-be-processed image by using N second modules connected in series, to obtain a first feature;
performing feature aggregation on at least the first feature by using the first module, to obtain a second feature;
performing at least M times of feature transformation on the second feature by using M second modules connected in series, to obtain a third feature; and
obtaining the feature of the to-be-processed image based on the third feature.

13. The method according to claim 12, wherein the to-be-trained model further comprises a third module, and the obtaining the feature of the to-be-processed image based on the third feature comprises:

fusing the to-be-processed image and the third feature by using the third module, to obtain a fourth feature; and obtaining the feature of the to-be-processed image based on the fourth feature.

14. The method according to claim 13, wherein the to-be-trained model further comprises K fourth modules that are connected in series and a fifth module, K≥1, and the obtaining the feature of the to-be-processed image based on the fourth feature further comprises:

performing at least K times of feature transformation on the fourth feature by using the K fourth modules, to obtain a fifth feature; and
fusing the fourth feature and the fifth feature by using the fifth module, to obtain the feature of the to-be-processed image.

15. The method according to any one of claims 11 to 14, wherein the first module comprises the graph neural network, a normalization layer, and an activation function layer, and the graph neural network of the first module, the normalization layer of the first module, and the activation function layer of the first module are connected in series.

16. The method according to any one of claims 11 to 15, wherein the second module comprises a feature transformation layer and a normalization layer, the feature transformation layer of the second module and the normalization layer of the second module are connected in series, and the feature transformation layer of the second module is a fully-connected layer, a convolutional layer, or a Fourier transformation layer.

17. The method according to claim 14, wherein the fourth module comprises a feature transformation layer and a normalization layer, and the feature transformation layer of the fourth module and the normalization layer of the fourth module are connected in series; or,

the fourth module comprises a feature transformation layer, a normalization layer, and an activation function layer, and the feature transformation layer of the fourth module, the normalization layer of the fourth module, and the activation function layer of the fourth module are connected in series, wherein
the feature transformation layer of the fourth module is a fully-connected layer, a convolutional layer, or a Fourier transformation layer.

18. The method according to any one of claims 11 to 17, wherein before the processing the to-be-processed image by using a to-be-trained model, to obtain a feature of the to-be-processed image, the method further comprises:

dividing the to-be-processed image, to obtain P patches, wherein P>1;
mapping the P patches, to obtain vector representations of the P patches;
and constructing an initial feature of the to-be-processed image based on the vector representations of the P patches; and
the processing the to-be-processed image by using a to-be-trained model, to obtain a feature of the to-be-processed image comprises:
processing the initial feature of the to-be-processed image by using the to-be-trained model, to obtain the feature of the to-be-processed image.

19. The method according to claim 18, wherein before the constructing an initial feature of the to-be-processed image based on the vector representations of the P patches, the method further comprises:

adding positional encoding of an $i^{th}$ patch and a vector representation of the $i^{th}$ patch, to obtain a vector representation that is of the $i^{th}$ patch and that is obtained through processing, wherein the positional encoding of the $i^{th}$ patch indicates a position of the $i^{th}$ patch in the to-be-processed image, and i=1, ..., P; and
the constructing an initial feature of the to-be-processed image based on the vector representations of the P patches comprises:
constructing the initial feature of the to-be-processed image based on vector representations that are of the P patches and that are obtained through processing.

20. A visual task processing apparatus, wherein the apparatus comprises:

an obtaining module, configured to obtain a to-be-processed image;
a first processing module, configured to process the to-be-processed image by using a target model, to obtain a feature of the to-be-processed image, wherein the target model comprises a first module and a second module, the first module is connected to the second module, the first module comprises at least a graph neural network, and the second module is configured to implement at least feature transformation; and

a second processing module, configured to complete a visual task for the to-be-processed image based on the feature of the to-be-processed image.

21. A model training apparatus, wherein the apparatus comprises:

a first obtaining module, configured to obtain a to-be-processed image;

a processing module, configured to process the to-be-processed image by using a to-be-trained model, to obtain a feature of the to-be-processed image, wherein the to-be-trained model comprises a first module and a second module, the first module is connected to the second module, the first module comprises at least a graph neural network, and the second module is configured to implement at least feature transformation;

a second obtaining module, configured to obtain a target loss based on the feature of the to-be-processed image and a real feature of the to-be-processed image, wherein the target loss indicates a difference between the feature of the to-be-processed image and the real feature of the to-be-processed image; and

an updating module, configured to update parameters of the to-be-trained model based on the target loss, until a model training condition is met, to obtain a target model.

22. A visual task processing apparatus, wherein the apparatus comprises a memory and a processor, the memory stores code, the processor is configured to execute the code, and when the code is executed, the visual task processing apparatus performs the method according to any one of claims 1 to 19.

23. A computer storage medium, wherein the computer storage medium stores one or more instructions, and when the instructions are executed by one or more computers, the one or more computers are enabled to perform the method according to any one of claims 1 to 19.

24. A computer program product, wherein the computer program product stores instructions, and when the instructions are executed by a computer, the computer is enabled to perform the method according to any one of claims 1 to 19.

Intelligent information chain

Intelligent products and industry application

| Translation/Text analysis/... | Speech/Vision/ Image/... |

| Data | Data processing: | Data training/ Machine learning/ Deep learning | Searching/ Inference/ Decision-making | ... |

Infrastructure | Sensor | Intelligent chip | Basic platform | ...

IT value chain

FIG. 1

FIG. 2a

FIG. 2b

FIG. 2c

FIG. 3

FIG. 4

Target model

Second module

Feature
transformation
layer

First module

Graph neural
network

FIG. 5

Obtain a to-be-processed image

601

Process the to-be-processed image by using a target model, to obtain a feature of the to-be-processed image, where the target model includes a first module and a second module, the first module is connected to the second module, the first module includes at least a graph neural network, and the second module is configured to implement at least feature transformation

602

Complete a visual task for the to-be-processed image based on the feature of the to-be-processed image

603

FIG. 6

FIG. 7

Obtain a to-be-processed image /801

Perform at least N times of feature transformation on the to-be-processed image by using N second modules connected in series, to obtain a first feature /802

Perform feature aggregation on at least the first feature by using a first module, to obtain a second feature /803

Perform at least M times of feature transformation on the second feature by using M second modules connected in series, to obtain a third feature /804

Fuse the to-be-processed image and the third feature by using a third module, to obtain a fourth feature, where the fourth feature is a feature of the to-be-processed image /805

Complete a visual task for the to-be-processed image based on the feature of the to-be-processed image /806

FIG. 8

FIG. 9

```
┌─────────────────────────────────────────────────────────┐
│           Obtain a to-be-processed image                │  1001
└─────────────────────────────────────────────────────────┘
                            │
                            ▼
┌─────────────────────────────────────────────────────────┐
│  Perform at least N times of feature transformation on  │  1002
│  the to-be-processed image by using N second modules    │
│  connected in series, to obtain a first feature         │
└─────────────────────────────────────────────────────────┘
                            │
                            ▼
┌─────────────────────────────────────────────────────────┐
│  Perform feature aggregation on at least the first      │  1003
│  feature by using a first module, to obtain a second    │
│  feature                                                │
└─────────────────────────────────────────────────────────┘
                            │
                            ▼
┌─────────────────────────────────────────────────────────┐
│  Perform at least M times of feature transformation on  │  1004
│  the second feature by using M second modules connected │
│  in series, to obtain a third feature                   │
└─────────────────────────────────────────────────────────┘
                            │
                            ▼
┌─────────────────────────────────────────────────────────┐
│  Fuse the to-be-processed image and the third feature   │  1005
│  by using a third module, to obtain a fourth feature,   │
│  where the fourth feature is a feature of the           │
│  to-be-processed image                                  │
└─────────────────────────────────────────────────────────┘
                            │
                            ▼
┌─────────────────────────────────────────────────────────┐
│  Perform at least K times of feature transformation on  │  1006
│  the fourth feature by using K fourth modules connected │
│  in series, to obtain a fifth feature                   │
└─────────────────────────────────────────────────────────┘
                            │
                            ▼
┌─────────────────────────────────────────────────────────┐
│  Fuse the fourth feature and the fifth feature by using │  1007
│  a fifth module, to obtain a feature of the             │
│  to-be-processed image                                  │
└─────────────────────────────────────────────────────────┘
                            │
                            ▼
┌─────────────────────────────────────────────────────────┐
│  Complete a visual task for the to-be-processed image   │  1008
│  based on the feature of the to-be-processed image      │
└─────────────────────────────────────────────────────────┘
```

FIG. 10

FIG. 11

Obtain a to-be-processed image — 1201

Process the to-be-processed image by using a to-be-trained model, to obtain a feature of the to-be-processed image, where the to-be-trained model includes a first module and a second module, the first module is connected to the second module, the first module includes at least a graph neural network, and the second module is configured to implement at least feature transformation — 1202

Obtain a target loss based on the feature of the to-be-processed image and a real feature of the to-be-processed image, where the target loss indicates a difference between the feature of the to-be-processed image and the real feature of the to-be-processed image — 1203

Update a parameter of the to-be-trained model based on the target loss, until a model training condition is met, to obtain a target model — 1204

FIG. 12

Visual task processing apparatus

Obtaining module — 1301

First processing module — 1302

Second processing module — 1303

FIG. 13

Model training apparatus

First obtaining module — 1401

Processing module — 1402

Second obtaining module — 1403

Updating module — 1404

FIG. 14

1500

Execution device

Antenna                                    Antenna

| Receiver 1501 | Transmitter 1502 |

Processor 1503

| Memory 1504 | Application processor 15031 | Communication processor 15032 |

FIG. 15

1600

Training device

1614 — Central processing unit

Power supply — 1626

Operating system — 1641

Data — 1644

Application — 1642

Storage medium — 1630

Memory — 1632

Wired or wireless network interface — 1650

Input/Output interface — 1658

FIG. 16

EP 4 524 874 A1

Weight memory
1702

Input memory
1701

Operation circuit
1703

Host CPU

Vector calculation
unit 1707

Accumulator
1708

Direct memory
access
controller 1705

Unified
memory 1706

Controller
1704

Instruction
fetch buffer
1709

External
memory

Bus interface unit 1713

Neural network processor 1700

FIG. 17

## INTERNATIONAL SEARCH REPORT

International application No.

**PCT/CN2023/095069**

| A. | CLASSIFICATION OF SUBJECT MATTER |
|---|---|

G06T3/00(2006.01)i

According to International Patent Classification (IPC) or to both national classification and IPC

| B. | FIELDS SEARCHED |
|---|---|

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 视觉, 图像, 特征, 神经网络, 特征变换, 任务, vision, image, character, neural network, feature transformation, task

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110070030 A (BEIJING MEGVII TECHNOLOGY CO., LTD.) 30 July 2019 (2019-07-30) description, paragraphs [0056]-[0165] | 1-24 |
| A | CN 110222717 A (HUAWEI TECHNOLOGIES CO., LTD.) 10 September 2019 (2019-09-10) entire document | 1-24 |
| A | CN 112990211 A (HUAWEI TECHNOLOGIES CO., LTD.) 18 June 2021 (2021-06-18) entire document | 1-24 |
| A | CN 113065638 A (HUAWEI TECHNOLOGIES CO., LTD.) 02 July 2021 (2021-07-02) entire document | 1-24 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 June 2023** | **23 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/095069**

| Patent document cited in search report | | | Publication date (day/month/year) | Patent family member(s) | Publication date (day/month/year) |
|---|---|---|---|---|---|
| CN | 110070030 | A | 30 July 2019 | None | |
| CN | 110222717 | A | 10 September 2019 | None | |
| CN | 112990211 | A | 18 June 2021 | None | |
| CN | 113065638 | A | 02 July 2021 | None | |

Form PCT/ISA/210 (patent family annex) (July 2022)

**REFERENCES CITED IN THE DESCRIPTION**

**Patent documents cited in the description**

- CN 202210612484X